(19) Europäisches Patentamt
European Patent Office
Office européen des brevets

(11) EP 4 741 441 A1

(12) **EUROPEAN PATENT APPLICATION**
published in accordance with Art. 153(4) EPC

(43) Date of publication:
**13.05.2026 Bulletin 2026/20**

(21) Application number: **24847725.9**

(22) Date of filing: **24.05.2024**

(51) International Patent Classification (IPC):
***C08G 65/335*** *(2006.01)* ***C08G 65/333*** *(2006.01)*
***C08G 65/329*** *(2006.01)* ***H01M 4/62*** *(2006.01)*
***H01M 4/136*** *(2010.01)* ***H01M 10/052*** *(2010.01)*

(52) Cooperative Patent Classification (CPC):
**C08G 65/329; C08G 65/333; C08G 65/335; H01M 4/136; H01M 4/62; H01M 10/052;**
Y02E 60/10

(86) International application number:
**PCT/CN2024/095211**

(87) International publication number:
**WO 2025/025762 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.08.2023 CN 202310961340**
**29.08.2023 CN 202311098921**

(71) Applicant: **Contemporary Amperex Technology Co., Limited**
**Ningde, Fujian 352100 (CN)**

(72) Inventors:
- **SHI, Hanwen**
  **Ningde, Fujian 352100 (CN)**
- **WANG, Zejiang**
  **Ningde, Fujian 352100 (CN)**
- **HUANG, Jichun**
  **Ningde, Fujian 352100 (CN)**
- **WANG, Xinghui**
  **Ningde, Fujian 352100 (CN)**
- **QING, Yalong**
  **Ningde, Fujian 352100 (CN)**

(74) Representative: **Gong, Jinping**
**CocreateIP**
**Neumarkter Straße 21**
**81673 München (DE)**

(54) **POLYMER AND PREPARATION METHOD THEREFOR, POSITIVE ELECTRODE SHEET, SECONDARY BATTERY, AND ELECTRIC DEVICE**

(57) Provided in the present application are a polymer, a preparation method therefor, a positive electrode sheet, a secondary battery, and an electrical device. The polymer includes a structure as represented by Formula I. X includes a phosphate group or a phosphite group, R1 and R3 each independently include at least one of a polyether segment, a polyester segment, hydrogen and a hydrocarbon group. At least one of R1 and R3 includes a polyether segment or a polyester segment. R2 includes an organic segment. The polymer provided in the present application can effectively improve the maximum solid content of a positive electrode slurry, shorten the filtering time, improve the production efficiency and quality of the electrode sheet, and also improve the flexibility of the electrode sheet.

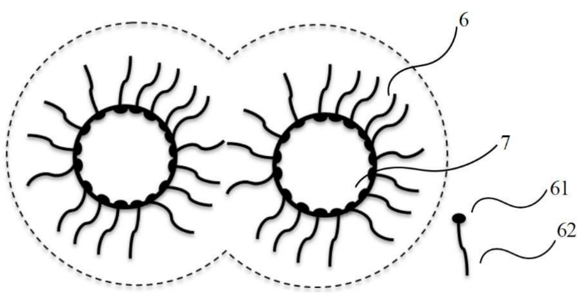


FIG. 1

EP 4 741 441 A1

## Description

### CROSS-REFERENCE TO RELATED APPLICATIONS

The present application claims priority to Chinese Patent Application No. 202310961340.X, filed on August 1, 2023 and entitled "POLYMER, PREPARATION METHOD THEREFOR, POSITIVE ELECTRODE SHEET, SECONDARY BATTERY, AND ELECTRICAL DEVICE", and claims priority to Chinese Patent Application No. 202311098921.1, filed on August 29, 2023 and entitled "POLYMER AND PREPARATION METHOD THEREFOR, POSITIVE ELECTRODE SHEET, SECONDARY BATTERY, AND ELECTRICAL DEVICE", which are incorporated herein by reference in their entireties.

### TECHNICAL FIELD

The present application relates to the technical field of a secondary battery, and particularly relates to a polymer, a preparation method therefor, a positive electrode sheet, a secondary battery, and an electrical device.

### BACKGROUND

In recent years, secondary batteries have been widely applied to energy storage power systems of hydropower, thermal power, wind power and solar power stations, and various fields such as electric power tools, electric bicycles, electric motorcycles, electric vehicles, military equipment and aerospace.

An electrode sheet in a secondary battery is generally prepared by coating a slurry including an active material onto a current collector followed by drying. Increasing the solvent content in the slurry and reducing the solid content of the slurry are effective measures for optimizing the dispersion uniformity of the slurry and improving the coating quality of the slurry. However, the slurry with a high solvent content requires long drying time and is high in manufacturing cost. How to improve the solid content of the slurry and ensure the dispersion uniformity of the slurry at the same time to further effectively improve the maximum solid content of the slurry is a technical problem urgently needing to be solved in the art.

### SUMMARY

The present application is provided in view of the foregoing subject. An objective of the present application is to provide a dispersant capable of improving the maximum solid content of a slurry.

According to a first aspect of the present application, a polymer is provided, and includes a structure as represented by Formula I:

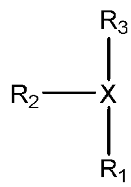

Formula I.

X includes a phosphate group or a phosphite group. $R_1$ and $R_3$ each independently include at least one of a polyether segment, a polyester segment, hydrogen and a hydrocarbon group. At least one of $R_1$ and $R_3$ includes a polyether segment or a polyester segment. $R_2$ includes an organic segment.

The polymer can effectively improve the maximum solid content of a positive electrode slurry, shorten the filtering time, improve the production efficiency and quality of an electrode sheet, and also improve the flexibility of the electrode sheet.

In any one implementation, the organic segment of $R_2$ includes at least one of an amide group, an amino group and an aryl group.

A nitrogen-containing group or the aryl group in the polymer is favorable for improving an anchoring effect between the polymer and a positive electrode active material, so that the polymer is particularly applicable to a carbon-coated positive electrode active material, and the universality of the polymer as a dispersant is further improved. By increasing anchoring sites of the dispersant, the dispersion effect of the polymer is more effectively achieved, thereby further improving the maximum solid content of the slurry, improving the forming quality of the electrode sheet, and achieving cost reduction with efficiency enhancement at the same time.

In any one implementation, the organic segment of $R_2$ further includes a $C_{2-12}$ hydrocarbon group.

The inclusion of the $C_{2-12}$ hydrocarbon group in the polymer is favorable for further improving the anchoring effect of the polymer and the carbon-modified positive electrode active material. The hydrocarbon group forms effective

anchoring with carbon on the positive electrode active material, improving the dispersion of anchoring sites of the polymer on the positive electrode active material, thereby further expanding the application range of the polymer dispersant, improving the maximum solid content of the slurry, improving the forming quality of the electrode sheet, and achieving cost reduction with efficiency enhancement at the same time.

In any one implementation, $R_2$ includes a structure as represented by Formula II:

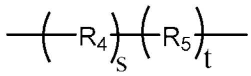

Formula II.

$R_4$ and $R_5$ are randomly copolymerized. $R_4$ includes at least one of a $C_{2-12}$ hydrocarbylene group, and a $C_{3-13}$ amide group. $R_5$ includes at least one of

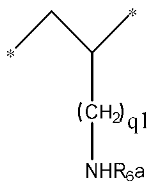 , 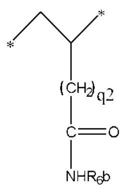 , 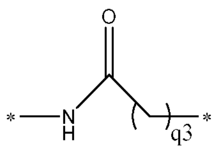 , and 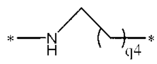 .

q1, q2, q3, and q4 each independently include any integer between 0 and 4. $R_6^a$ and $R_6^b$ include at least one of hydrogen and a $C_{1-4}$ alkyl group. $1 \leq s \leq 6$. $1 \leq t \leq 10$.

The organic segment of the above structure can more effectively achieve an anchoring effect through copolymerization of the nitrogen-containing group and the hydrocarbon group, improve the dispersion effect of the polymer, and effectively improve the solid content of the slurry.

In any one implementation, $R_2$ includes a structure as represented by Formula III:

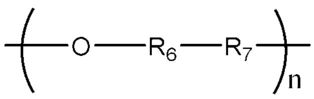

Formula III.

$R_6$ includes a $C_{2-12}$ hydrocarbylene group. $R_7$ includes at least one of

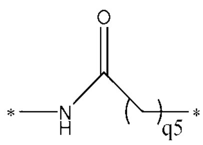

and

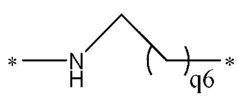 .

q5 and q6 each independently include any integer between 0 and 4. $1 \leq n \leq 6$.

The organic segment of the above structure can more effectively achieve an anchoring effect through alternating copolymerization of the nitrogen-containing group and the hydrocarbon group, improve the dispersion effect of the polymer, and effectively improve the solid content of the slurry.

In any one implementation, a terminal group of $R_2$ includes at least one of $-C(O)-NH_2$ and $-CH_2-NH_2$.

The polymer with terminal groups including $-C(O)-NH_2$ and $-CH_2-NH_2$ can more effectively achieve the dispersion effect, improve the maximum solid content of the slurry, and further improve the forming quality and efficiency of the electrode sheet.

In any one implementation, at least one of $R_1$ and $R_3$ includes a polyether segment. Optionally, each of $R_1$ and $R_3$ includes a polyether segment.

In any one implementation, at least one of $R_1$ and $R_3$ includes a polyether segment as represented by Formula IV:

$$*-(EO)_{n1}-(PO)_{m1}-* \quad \text{Formula IV.}$$

EO represents $-CH_2-CH_2-O-$. PO represents $-CH(CH_3)-CH_2-O-$. $4 \leq m1 \leq 50$. $4 \leq n1 \leq 50$.

The polyether segment having the above structure has proper steric hindrance and a low glass transition temperature, which can more effectively reduce the degree of crystallographic order and glass transition temperature of the binder in the positive electrode slurry, thereby reducing the crystallinity of the binder, and improving the flexibility of the electrode sheet. Through the dispersion and flexibility improving effects, the uniformity and flexibility of the electrode sheet are improved, so that the safety performance and the ultimate compaction density of the battery can be improved. Therefore, the loading capacity of the positive electrode active material in the battery is improved, contributing to a further improvement in the energy density of the battery.

In any one implementation, the terminal group of the polyether segment includes an aryl group.

The aryl group has excellent compatibility with a carbon layer on the surface of the positive electrode active material, so it is favorable for further improving the anchoring effect of the polymer and the carbon-modified positive electrode active material. Through the effective anchoring between the aryl group and the carbon on the positive electrode active material, the dispersion of anchoring sites of the polymer on the positive electrode active material can be improved. As a result, the application range of the polymer dispersant is further expanded, the maximum solid content of the slurry is improved, and the forming quality of the electrode sheet is improved while reducing costs and improving efficiency at the same time.

In any one implementation, X includes a phosphate group.

The phosphate-based polymer can more effectively improve the solid content of the slurry, shorten the filtering time, and improve the flexibility of the electrode sheet. In addition, the phosphate-based polymer has high stability, and can effectively improve the cycling capacity retention rate of the battery while improving the dispersibility of the slurry.

In any one implementation, the polymer includes at least one of the following polymers as represented by the following formulas:

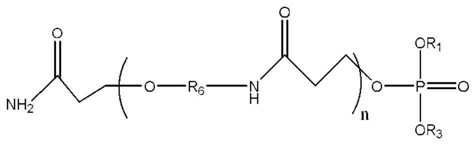
,
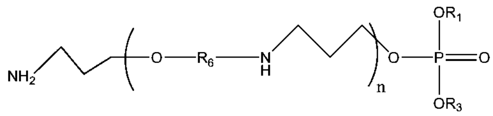
,
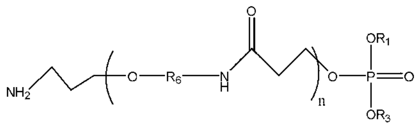
,
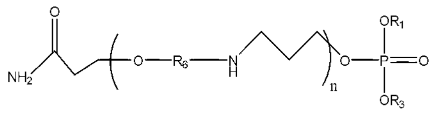
,
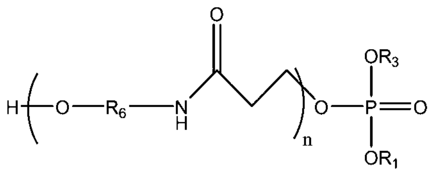
,
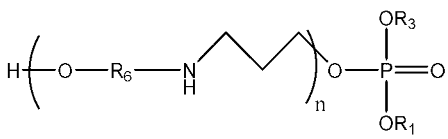
,
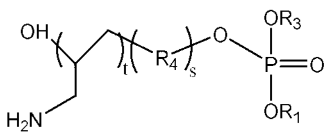
,
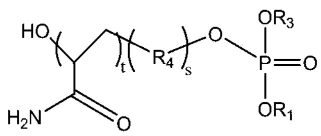
,
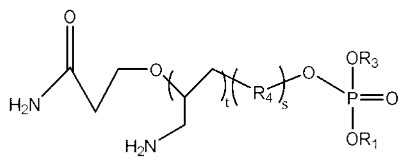
,

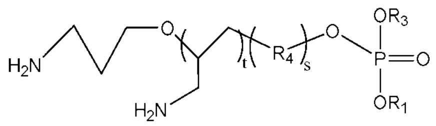,
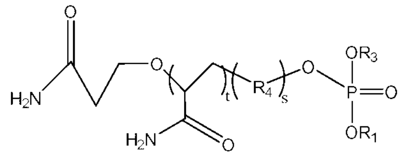,

and

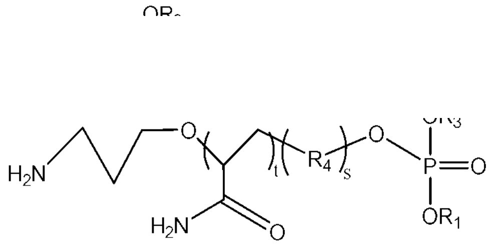.

At least one of $R_1$ and $R_3$ includes a block copolymer polyether segment as represented by Formula IV:

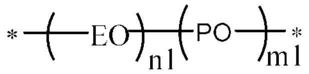
Formula IV.

EO represents $-CH_2-CH_2-O-$. PO represents $-CH(CH_3)-CH_2-O-$. $4 \leq m1 \leq 15$. $4 \leq n1 \leq 15$. $R_6$ and $R_4$ each independently include at least one of a $C_{4-8}$ alkylene group and a $C_{4-8}$ alkenylene group.

In any one implementation, the polymer is as represented by the following formula:

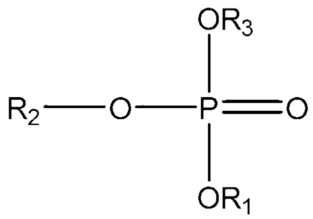

$R_2$ includes at least one of hydrogen, an aryl group, a substituted or unsubstituted alkyl group, and an amino-group-containing or amide-group-containing organic segment.

At least one of $R_1$ and $R_3$ includes a block copolymer polyether segment as represented by Formula IV:

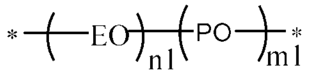
Formula IV.

EO represents $-CH_2-CH_2-O-$. PO represents $-CH(CH_3)-CH_2-O-$. $4 \leq m1 \leq 50$. $4 \leq n1 \leq 50$. A terminal group of the polyether segment includes a phenyl group.

In any one implementation, a weight-average molecular weight of the polymer is 1,000 to 10,000, and optionally 2,000 to 5,000.

The polymer with the weight-average molecular weight in the above range can achieve the excellent dispersibility to further improve the solid content of the slurry, and can further endow the slurry with excellent flow performance, reducing the coating time, and improving the coating uniformity and speed. The polymer with the weight-average molecular weight being 2,000 to 5,000 can more effectively achieve the dispersion effect to improve the maximum solid content of the slurry, and shorten the filtering time.

According to a second aspect of the present application, a preparation method for a polymer is provided. The preparation method includes:

reacting a compound as represented by Formula VI with $R_3OH$, $R_1OH$, water, and an unsaturated-bond-containing polymerization monomer to prepare a polymer including a structure as represented by Formula I:

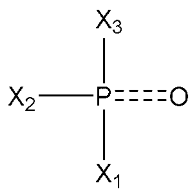

Formula VI

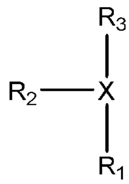

Formula I.

X includes a phosphate group or a phosphite group. Each of $X_1$, $X_2$ and $X_3$ includes halogen. $R_1$ and $R_3$ each independently include at least one of a polyether segment, a polyester segment, hydrogen and a hydrocarbon group. At least one of $R_1$ and $R_3$ includes a polyether segment or a polyester segment. $R_2$ includes an organic segment.

In any one implementation, the preparation method includes the following steps:

subjecting the compound as represented by Formula VI and $R_3OH$, $R_1OH$ and water to a first reaction to prepare an intermediate product as represented by Formula VII:

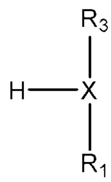

Formula VII;

and

subjecting the intermediate product and a polymerization monomer including at least one of unsaturated-bond-containing amide and unsaturated-bond-containing amine to a second reaction to prepare the polymer.

In any one implementation, the second reaction specifically includes the following steps:

subjecting the intermediate product and at least one of the unsaturated-bond-containing amide and the unsaturated-bond-containing amine to an addition reaction, and then a substitution reaction with a halogen-substituted organic alcohol; and
sequentially cycling the addition reaction and the substitution reaction for many times, and then preparing the polymer.

$R_2$ includes a structure as represented by Formula III:

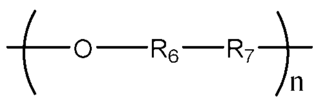

Formula III.

$R_6$ includes a $C_{2-12}$ hydrocarbon group. $R_7$ includes at least one of

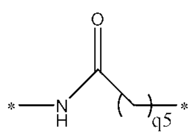

and

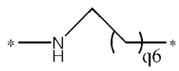.

q5 and q6 each independently include any integer between 0 and 4. $1 \le n \le 6$.

In any one implementation, the preparation method further includes the following step:

subjecting the intermediate product and (i) at least one of unsaturated-bond-containing amide and unsaturated-bond-containing amine and (ii) at least one of an unsaturated-bond-containing hydrocarbon monomer and a cyclic amide monomer to a third reaction to prepare the polymer. $R_2$ includes a structure as represented by Formula II:

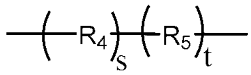
Formula II.

$R_4$ and $R_5$ are randomly copolymerized. $R_4$ includes at least one of a $C_{2-12}$ hydrocarbon group, and a $C_{3-13}$ amide group. $R_5$ includes at least one of

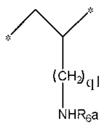, 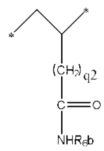, 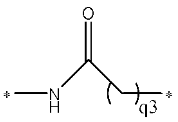, and 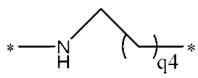.

q1, q2, q3, and q4 each independently include any integer between 0 and 4. $R_6^a$ and $R_6^b$ include at least one of hydrogen and a $C_{1-4}$ alkyl group. $1 \le s \le 6$. $1 \le t \le 10$.

According to another aspect of the present application, a preparation method for a polymer is provided. The preparation method includes: reacting a compound as represented by Formula VI with a raw material including $R_3OH$ and $R_1OH$ to prepare a polymer including a structure as represented by Formula I:

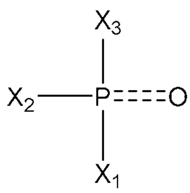
Formula VI

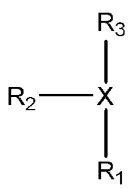
Formula I.

X includes a phosphate group or a phosphite group. Each of $X_1$, $X_2$ and $X_3$ includes halogen. $R_1$ and $R_3$ each independently include at least one of a polyether segment, a polyester segment, hydrogen and a hydrocarbon group. At least one of $R_1$ and $R_3$ includes a polyether segment. A terminal group of at least one of the polyether segments includes an aryl group. $R_2$ includes an organic segment.

According to a third aspect of the present application, application of the polymer or the polymer prepared by the preparation method provided by any one implementation as a dispersant is provided.

According to a fourth aspect of the present application, a positive electrode slurry is provided, and includes a dispersant. The dispersant includes the polymer according to a first aspect of the claim or the polymer prepared by the preparation method according to the second aspect.

The positive electrode slurry has high solid content, and is favorable for improving the forming efficiency and quality of the positive electrode film layer and improving the electrochemical performance and processing efficiency of the battery.

In any one implementation, the positive electrode slurry includes a positive electrode active material. The positive

electrode active material includes at least one of lithium-containing phosphate and a carbon-modified material thereof. Optionally, the positive electrode active material includes at least one of lithium iron phosphate and a doping material thereof, lithium iron manganese phosphate and a doping material thereof, a carbon-coated material of lithium iron phosphate and a doping material thereof, and a carbon-coated material of lithium iron manganese phosphate and a doping material thereof.

The polymer is negatively charged, and can further enhance the mutual anchoring with weakly acidic lithium-containing phosphate through electrostatic interaction to further improve the dispersion effect of the polymer on the lithium-containing phosphate. In addition, the lithium-containing phosphate has poor electrical conductivity. Therefore, in a preparation process of the positive electrode active material, coating a carbon layer by sintering an organic material such as glucose or sucrose is generally used to improve the electrical conductivity. Moreover, the polymer has a group anchored to the carbon coating layer, and also achieves an excellent dispersion effect on the carbon-modified lithium-containing phosphate, which can further improve the dispersibility of the slurry, thereby improving the maximum solid content of the slurry.

In any one implementation, the positive electrode active material includes a core and a carbon coating layer. The carbon coating layer at least covers a part of surface of the core. The molar ratio of $sp^2$ hybridized carbon atoms to $sp^3$ hybridized carbon atoms in the carbon coating layer is not smaller than 0.2, optionally not smaller than 0.5, and optionally not smaller than 0.8.

By forming the carbon coating layer on the surface of the core, the electrical conductivity of the positive electrode active material can be improved. When the molar ratio of the $sp^2$ hybridized carbon atoms to the sp3 hybridized carbon atoms in the carbon coating layer on the surface of the core is not smaller than 0.5, the orderliness of the carbon coating layer structure of the positive electrode active material is higher. As a result, a pore structure of the carbon coating layer has high compactness and a small pore size distribution range. Therefore, in a battery production process, external water is difficult to enter pores of the carbon coating layer, so that the water absorption performance and water storage performance of the positive electrode active material are effectively reduced, the safety performance and cycling performance of the battery are improved, the energy consumption in the drying process is effectively avoided, and the production cost is obviously reduced.

However, the carbon coating layer with the molar ratio of the $sp^2$ hybridized carbon atoms to the $sp^3$ hybridized carbon atoms being not smaller than 0.5 has a high graphitization degree, so that the positive electrode active material is easy to agglomerate, and is difficult to effectively disperse in a slurry preparation process. The dispersant provided by embodiments of the present application and the carbon coating layer with high graphitization degree have rich anchoring groups, and are particularly applicable to dispersion of the positive electrode active material having the coating layer with high graphitization degree. Through the cooperation of the dispersant and the carbon coating layer, the use performance and processing performance of the battery can be improved at the same time.

In any one implementation, the thickness of the carbon coating layer is not greater than 15 nm. Optionally, the thickness of the carbon coating layer is not greater than 10 nm. Optionally, the thickness of the carbon coating layer is 4 nm to 8 nm. A carbon coating layer within the above thickness range can effectively improve the electrical conductivity of the positive electrode active material by forming a relatively thin carbon coating layer on the surface of the core, and can improve the compaction performance during preparation of the battery electrode sheet from the positive electrode active material may be improved.

In any one implementation, based on the total mass of the dry material of the positive electrode slurry, the mass content of the polymer is 0.1% to 2.0%, and optionally 0.2% to 1.0%.

The polymer in the above range can achieve an effective dispersion effect, and can further take the volume energy density of the battery into consideration without causing serious negative influence on the electrochemical performance of the battery.

In any one implementation, the positive electrode slurry includes a binder. The binder includes a vinylidene fluoride polymer with a weight-average molecular weight not smaller than 300,000, and optionally, the weight-average molecular weight of the binder is 700,000 to 9,000,000.

The vinylidene fluoride polymer with the weight-average molecular weight in this range has excellent bonding performance and electrochemical stability. Using the vinylidene fluoride polymer with the weight-average molecular weight being 700,000 to 9,000,000 can further reduce the consumption of vinylidene fluoride, reduce the rigidity of the positive electrode film layer, and improve the flexibility of the electrode sheet to further improve the ultimate compaction density of the battery, contributing to the improvement of the energy density of the battery.

In any one implementation, a maximum solid content of the positive electrode slurry is not lower than 60%, and optionally 60% to 80%.

According a fifth aspect of the present application, a positive electrode sheet is provided. The positive electrode sheet includes a positive electrode film layer. The positive electrode film layer is prepared from the positive electrode slurry according to any one implementation, or the positive electrode film layer includes a dispersant. The dispersant includes the polymer according to the first aspect or the polymer prepared by the preparation method according to the second aspect.

In any one implementation, the number of foldings of the positive electrode sheet at a compaction density of 2.6 g/cm$^3$ is not smaller than 2, and optionally 3 to 6.

The polymer can effectively improve the solid content of the slurry, and can also serve as a flexible enhancer to improve flexibility of the positive electrode sheet, further improving the safety performance and electrochemical performance of the battery.

In any one implementation, an areal density of the positive electrode sheet is not lower than 300 mg/1,540.25 cm$^2$, and optionally 300 mg/1,540.25 cm$^2$ to 600 mg/1,540.25 cm$^2$.

The polymer can effectively improve the maximum solid content of the slurry, so that the coating speed is accelerated by 30% or more. It is particularly applicable to high-speed coating and thick coating. Moreover, it effectively solves the problem that an electrode sheet is easy to crack in the thick coating process, facilitating the preparation of the positive electrode sheet having high flexibility and having no crack after winding and forming.

In any one implementation, the positive electrode film layer includes a dispersant. The dispersant includes a structure as represented by Formula I:

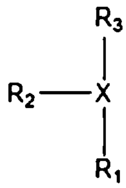

Formula I.

X includes a phosphate group or a phosphite group. $R_1$ and $R_3$ each independently include at least one of a polyether segment, a polyester segment, hydrogen and a hydrocarbon group. At least one of $R_1$ and $R_3$ includes a polyether segment or a polyester segment. $R_2$ includes an organic segment. Optionally, the organic segment of $R_2$ includes at least one of an amide group and an amino group. Optionally, a terminal group of the polyether segment includes an aryl group. The positive electrode active material includes at least one of lithium iron phosphate and a doping material thereof, lithium iron manganese phosphate and a doping material thereof, a carbon-coated material of lithium iron phosphate and a doping material thereof, and a carbon-coated material of lithium iron manganese phosphate and a doping material thereof. Optionally, the positive electrode active material includes at least one of lithium iron manganese phosphate and a doping material thereof, and a carbon-coated material of lithium iron manganese phosphate and a doping material thereof. Based on the total mass of the positive electrode film layer, the mass content of the dispersant is 0.1% to 2.0%, and optionally 0.2% to 1.0%.

The positive electrode film layer has good dispersibility and processability, and is favorable for improving the manufacturing efficiency and the battery performance.

According to a sixth aspect of the present application, a secondary battery is provided, and includes the positive electrode sheet according to the fifth aspect.

According to a seventh aspect of the present application, an electrical device is provided, and includes the secondary battery according to the sixth aspect.

## BRIEF DESCRIPTION OF THE DRAWINGS

FIG. 1 is a schematic diagram of a polymer dispersion mechanism according to an implementation of the present application;
FIG. 2 is a schematic diagram of a secondary battery according to an implementation of the present application;
FIG. 3 is an exploded view of the secondary battery according to an implementation of the present application shown in FIG. 2;
FIG. 4 is a schematic diagram of a battery module according to an implementation of the present application;
FIG. 5 is a schematic diagram of a battery pack according to an implementation of the present application;
FIG. 6 is an exploded view of the battery pack according to an implementation of the present application shown in FIG. 5; and
FIG. 7 is a schematic diagram of an electrical device using a secondary battery according to an implementation of the present application as a power supply.

Descriptions of reference numerals:
1 denotes a battery pack, 2 denotes an upper box, 3 denotes a lower box, 4 denotes a battery module, 5 denotes a secondary battery, 51 denotes a housing, 52 denotes an electrode assembly, 53 denotes a cover plate, 6 denotes a

polymer, 61 denotes an anchoring group, 62 denotes a flexible segment, and 7 denotes a positive electrode active material.

## DETAILED DESCRIPTION

Implementations of a polymer, a preparation method therefor, a positive electrode sheet, a secondary battery, and an electrical device of the present application are illustrated in detail and specifically disclosed hereafter properly with the reference to the accompanying drawings. However, there may be situations where unnecessary detailed illustrations are omitted. For example, there are situations where detailed illustrations of well-known matters and repeated illustrations of actually the same structure are omitted. Thus, the following illustrations do not become unnecessarily lengthy, which facilitates the understanding by those skilled in the art. In addition, the accompanying drawings and following illustrations are provided for those skilled in the art to fully understand the present application, and are not intended to limit the subject matter recited in the claims.

The "ranges" disclosed in the present application are defined in the form of lower and upper limits, with a given range being defined by the selection of a lower limit and an upper limit defining the boundaries of the particular range. The range defined in this way may include or exclude end values, and may be freely combined. That is, any one lower limit may be combined with any one upper limit to form a range. For example, if ranges of 60 to 120 and 80 to 110 are listed for a particular parameter, it is to be understood that ranges of 60 to 110 and 80 to 120 are also expected. Additionally, if minimum range values 1 and 2 and maximum range values 3, 4 and 5 are listed, the following ranges are all expected: 1 to 3, 1 to 4, 1 to 5, 2 to 3, 2 to 4, and 2 to 5. In the present application, unless otherwise specified, the numerical range "a to b" represents the abbreviated representation of any combination of real numbers between a and b, where both a and b are real numbers. For example, the numerical range "0 to 5" represents that all real numbers between 0 and 5 are listed herein. "0 to 5" is merely the abbreviated representation of the combination of these numbers. In addition, when a parameter is expressed as an integer $\geq 2$, it is equivalent to disclosing that the parameter is, for example, an integer of 2, 3, 4, 5, 6, 7, 8, 9, 10, 11, 12, etc.

Unless otherwise specified, all the implementations and optional implementations of the present application may be combined with each other to form new technical solutions.

Unless otherwise specified, all technical features and optional technical features of the present application may be combined with each other to form new technical solutions.

Unless otherwise specified, all the steps in the present application may be performed in the order described or in a random order, and preferably in the order described. For example, the description that the method includes steps (a) and (b) represents that the method may include steps (a) and (b) performed sequentially, or may include steps (b) and (a) performed sequentially. For example, the expression that the method may further include step (c) represents that step (c) may be added to the method in any order, for example, the method may include steps (a), (b) and (c), or steps (a), (c) and (b), or steps (c), (a) and (b), etc.

Unless otherwise specified, "comprise" and "include" mentioned in the present application represents open inclusion or closed inclusion. For example, the "comprise" and "include" may represent that other components not listed may further be comprised or included, or only listed components may be comprised or included.

Unless otherwise specified, in the present application, the term "or" is inclusive. For example, the phrase "A or B" represents "A, B, or both A and B". More specifically, any one of the following conditions satisfies the condition "A or B": A is true (or presents), and B is false (or does not present); A is false (or does not present), and B is true (or presents); or both A and B are true (or present).

In order to improve the dynamic performance and electrochemical performance of a battery, there is the synthesis of the positive electrode active material tends to nanocrystallization and compacter carbon coating. Therefore, the positive electrode active material may have a greater specific surface area, which leads to the need for more solvents in a slurry mixing process for effective dispersion. Consequently, this reduces the solid content of the slurry. The slurry with low solid content needs prolonged drying time in the coating and drying process of the electrode sheet, which leads to low production efficiency and high energy consumption. At the same time, the slurry with low solid content may have the problems such as electrode sheet edge warping, dry cracking and binder migration which degrade the quality of the electrode sheet in the long-time heating and drying process.

Based on this, according to a first aspect of the present application, a polymer is provided, and includes a structure as represented by Formula I:

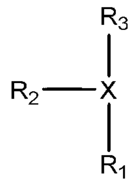

Formula I.

X includes a phosphate group or a phosphite group. $R_1$ and $R_3$ each independently include at least one of a polyether segment, a polyester segment, hydrogen and a hydrocarbon group. At least one of $R_1$ and $R_3$ includes a polyether segment or a polyester segment. $R_2$ includes an organic segment.

In this specification, on one hand, the polymer includes chemically homogeneous macromolecular assembles prepared through the polymerization reaction, which are nevertheless different in degree of polymerization, molar mass, and chain length; and on the other hand, the polymer further includes derivatives of the macromolecular assembles prepared through the polymerization reaction. That is, the polymer may be chemically homogeneous or chemically inhomogeneous polymer acquired through the reaction, for example, addition or substitution, of functional groups in the macromolecules.

In some implementations, the polymer includes phosphate-based polymer. A structure of the phosphate-based polymer is as represented by Formula V:

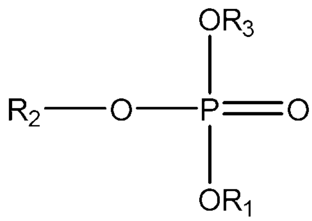

Formula V.

In some implementations, the polymer includes a phosphite-based polymer. The structural formula of the phosphite-based polymer is as represented by Formula V':

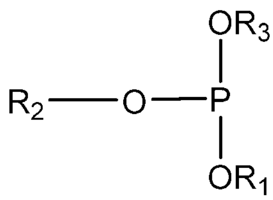

Formula V'.

In this specification, a polyether segment refers to a polymer segment whose structural unit contains an ether bond (-C-O-C-).

In this specification, a polyester segment refers to a polymer segment whose structural unit contains an ester group (-COO-).

In this specification, a hydrocarbon group refers to a group containing carbon and hydrogen atoms, including but not limited to an alkyl group, an alkenyl group, and an alkyne group.

In this specification, the organic segment may be formed by polymerizing repeated structural units, or may be an organic group formed by small-molecular monomers. The dispersion mechanism of the polymer provided by embodiments of the present application is as shown in FIG. 1. A polymer 6 includes an anchoring group 61 and a flexible segment 62. The anchoring group 61 at one end of the polymer 6 acts on a surface of a positive electrode active material 7, and achieves dispersion through the steric hindrance effect of the flexible segment 62. A phosphate group or a phosphite group in the polymer 6 can be effectively anchored to the surface of the positive electrode active material 7 through intermolecular forces or electrostatic interaction to serve as the anchoring group 61. Through the anchoring effect of the anchoring group on the surface of the positive electrode active material, the steric hindrance effect of the flexible segment 62 such as the polyether segment and the polyester segment on particle surfaces of the positive electrode active material can be effectively achieved to prevent the agglomeration of the positive electrode active material 7. Further, the quantity of the positive electrode active material 7 capable of being effectively dispersed per unit volume of solvent may be further increased, the gelation and agglomeration phenomena of the slurry in a homogenization process can be decelerated, the slurry viscosity is reduced, the effective solid content of the slurry is obviously improved, the filtering time of the slurry is shortened, and the forming efficiency and quality of the electrode sheet are improved. The polymer provided by

embodiments of the present application enables the slurry to be applicable to a thick coating process, which is favorable for improving the energy density of a battery.

At the same time, the flexible segments such as the polyether segment and the polyester segment in the polymer have proper steric hindrance and a low glass-transition temperature, and can change the flexibility of the electrode sheet through the motion of the flexible segments to synchronously achieve the dispersion and flexibility improving effects.

In some implementations, the organic segment of $R_2$ includes at least one of an amide group, an amino group and an aryl group.

In this specification, the amide group refers to a

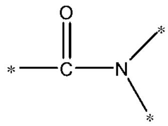

group, which includes a primary amide group, and also includes a secondary amide group and a tertiary amide group.

In this specification, the amino group refers to a

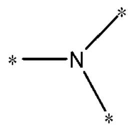

group, which includes a primary amino group, and also includes a secondary amino group and a tertiary amino group.

In this specification, the "aryl group" refers to an organic group derived from a monocyclic or polycyclic aromatic hydrocarbon through removing hydrogen atoms. As an example, the aryl group includes, but is not limited to, a phenyl group, a naphthyl group and a benzyl group. The aryl group may be unsubstituted or may be substituted by one or more proper substituent groups.

In addition, the aryl group may be monocyclic or polycyclic. In some implementations, the aryl group at least contains 6, 7, 8, 9 or 10 carbon atoms. Characterization of the polymer containing the amide group via infrared absorption spectroscopy allows the observation of an absorption peak of a carbonyl group at a wave band of 1,900 $cm^{-1}$ to 1,650 $cm^{-1}$ and a medium-intensity doublet absorption peak of an amide group at a wave band of 3,500 $cm^{-1}$ to 3,100 $cm^{-1}$.

A nitrogen-containing group or the aryl group in the polymer is favorable for improving an anchoring effect between the polymer and a positive electrode active material, so that the polymer is particularly applicable to a carbon-coated positive electrode active material, and the universality of the polymer as a dispersant is further improved. By increasing anchoring sites of the dispersant, the dispersion effect of the polymer is more effectively achieved, thereby further improving the maximum solid content of the slurry, improving the forming quality of the electrode sheet, and achieving cost reduction with efficiency enhancement at the same time.

In some implementations, the organic segment of $R_2$ further includes a $C_{2-12}$ hydrocarbon group.

In this specification, the "$C_{2-12}$ hydrocarbon group" refers to a straight-chain or branched-chain hydrocarbon chain group consisting solely of carbon and hydrogen atoms, which may be saturated or unsaturated, containing two to twelve carbon atoms, and is attached to the remaining part of a molecule through at least one single bond. An example of the $C_{2-12}$ hydrocarbon group includes but is not limited to: a $C_{2-12}$ alkyl group, a $C_{2-12}$ alkylene group, a $C_{2-12}$ alkenyl group, and a $C_{2-12}$ alkenylene group, for example, an ethylidene group, an ethyl group, a n-propyl group, 1-methylethyl (isopropyl), an isopropylidene group, 1,3-propylene, a butyl group, an isobutyl group, a tert-butyl group, 1,4-butylene, 1,3-butylene, 2-butenylene, an amyl group, an isoamyl group, a neo-amyl group, a hexyl group, a heptyl group, an octyl group, etc. The inclusion of the $C_{2-12}$ hydrocarbon group in the polymer is favorable for further improving the anchoring effect of the polymer and the carbon-modified positive electrode active material. The hydrocarbon group forms effective anchoring with carbon on the positive electrode active material, improving the dispersion of anchoring sites of the polymer on the positive electrode active material, thereby further expanding the application range of the polymer dispersant, improving the maximum solid content of the slurry, improving the forming quality of the electrode sheet, and achieving cost reduction with efficiency enhancement at the same time.

In some implementations, $R_2$ includes a structure as represented by Formula II:

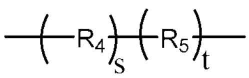

Formula II.

$R_4$ and $R_5$ are randomly copolymerized. $R_4$ includes at least one of a $C_{2-12}$ hydrocarbylene group, and a $C_{3-13}$ amide

group. $R_5$ includes at least one of

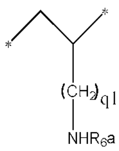, 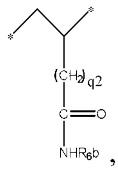, 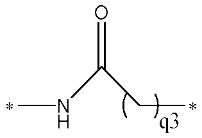, and 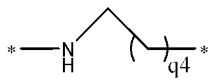.

q1, q2, q3, and q4 each independently include any integer between 0 and 4. $R_6^a$ and $R_6^b$ include at least one of hydrogen and a $C_{1-4}$ alkyl group. 1≤s≤6. 1≤t≤10.

The $C_{2-12}$ hydrocarbylene group refers to a bivalent hydrocarbon group with 2 to 12 carbon atoms, and includes a $C_{2-12}$ alkylene group, and a $C_{2-12}$ alkenylene group. As examples, $C_{2-12}$ alkylene includes but is not limited to: 1,2-ethylene, 1,2-propylene, 1,3-propylene, 1,3-butylene, 1,4-butylene, 2-methyl-1,3-propylene, 1,1-dimethyl-1,2-ethylene, 1,4-pentylene, 1,5-pentylene, 2-methyl-1,4-butylene, 2,2-dimethyl-1,3-propylene, 1,6-hexylene, 2-methyl-1,5-pentylene, 3-methyl-1,5-pentylene, 2,3-dimethyl-1,4-butylene, 1,7-heptylene, 2-methyl-1,6-hexylene, 3-methyl-1,6-hexylene, 2-ethyl-1,5-pentylene, 3-ethyl-1,5-pentylene, 2,3-dimethyl-1,5-pentylene, 2,4-dimethyl-1,5-pentylene, 1,8-octylene, 2-methyl-1,7-heptylene, 3-methyl-1,7-heptylene, 4-methyl-1,7-heptylene, 2-ethyl-1,6-hexylene, 3-ethyl-1,6-hexylene, 2,3-dimethyl-1,6-hexylene, 2,4-dimethyl-1,6-hexylene, 1,9-nonylene, 2-methyl-1,8-octylene, 3-methyl-1,8-octylene, 4-methyl-1,8-octylene, 2-ethyl-1,7-heptylene, 3-ethyl-1,7-heptylene, 1,10-decylene, 2-methyl-1,9-nonylene, 3-methyl-1,9-nonylene, 4-methyl-1,9-nonylene, 5-methyl-1,9-nonylene, 1,11-undecylene, 2-methyl-1,10-decylene, 3-methyl-1,10-decylene, 5-methyl-1,10-decylene, and 1,12-dodecylene.

The $C_{2-12}$ alkenylene group is a bivalent hydrocarbon group at least containing one double bond. As an example, the $C_{2-12}$ alkenylene group includes, for example, vinylidene, propenylene, 1-methylvinylidene, 1-butenylene, 2-butenylene, 1-methylpropenylene, 2-methylpropenylene, 1-pentenylene, 2-pentenylene, 1-methyl-1-butenylene, 1-methyl-2-butenylene, 1-hexenylene, 2-hexenylene, 3-hexenylene, 1-methyl-1-pentenylene, 1-methyl-2-pentenylene, 1-methyl-3-pentenylene, 1,4-dimethyl-1-butenylene, 1,4-dimethyl-2-butenylene, 1-heptenylene, 2-heptenylene, 3-heptenylene, 1-octenylene, 2-octenylene, and 3-octenylene.

In some implementations, the $C_{3-13}$ amide group includes the following group:

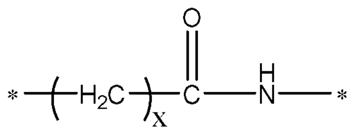.

x is 2 to 12, and optionally 2 to 5.

In some implementations, x may be 2, 3, 4, 5, 6, 7, 8, 9, 10, 11, or 12.

In this specification, the $C_1$-4 alkyl group includes at least one of a methyl group, an ethyl group, a propyl group, an isopropyl group, 2-methyl-1-propyl, and 2-methyl-2-propyl.

In some implementations, s may be any one of 1, 2, 3, 4, 5, and 6.

In some implementations, t may be any one of 1, 2, 3, 4, 5, 6, 7, 8, 9, and 10.

In some implementations, q1, q2, q3, and q4 are each independently selected from 0, 1, 2, 3, or 4.

The organic segment of the above structure includes the nitrogen-containing group and the hydrocarbylene group, which can more effectively achieve the anchoring effect, improve the dispersion effect of the polymer, and effectively improve the solid content of the slurry.

In some implementations, $R_2$ includes a structure as represented by Formula III:

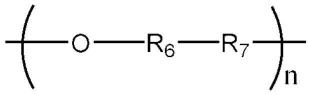 Formula III.

$R_6$ includes a $C_{2-12}$ hydrocarbylene group. $R_7$ includes at least one of

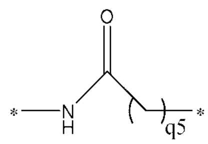

and

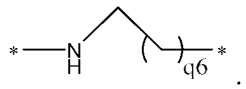

q5 and q6 each independently include any integer between 0 and 4. $1 \leq n \leq 6$.

In some implementations, q5 and q6 each independently include 0, 1, 2, 3, or 4.

In some implementations, n may be any one of 1, 2, 3, 4, 5, and 6.

The organic segment of the above structure can more effectively achieve an anchoring effect through alternating arrangement of the nitrogen-containing group and the hydrocarbylene group, improve the dispersion effect of the polymer, and effectively improve the solid content of the slurry.

In some implementations, a terminal group of $R_2$ includes at least one of $-C(O)-NH_2$ and $-CH_2-NH_2$.

The polymer with terminal groups including $-C(O)-NH_2$ and $-CH_2-NH_2$ can more effectively achieve the dispersion effect, improve the maximum solid content of the slurry, and further improve the forming quality and efficiency of the electrode sheet.

In some implementations, at least one of $R_1$ and $R_3$ includes a polyether segment. In some implementations, $R_1$ and $R_3$ each include a polyether segment. Characterization of the polymer containing the polyether segment via infrared absorption spectroscopy allows the observation of an absorption peak of an ether bond at a wave band of 1,250 $cm^{-1}$ to 1,100 $cm^{-1}$.

In some implementations, $R_2$ includes at least one of H and an aryl group.

In some implementations, one of $R_1$ and $R_3$ includes a polyether segment, and the other one includes a $C_{1-4}$ alkyl group.

In some implementations, $R_1$ and $R_3$ each include a polyether segment.

Compared with the condition that one of $R_1$ and $R_3$ includes a polyether segment, and the other one includes a $C_{1-4}$ alkyl group, the condition that $R_1$ and $R_3$ each include a polyether segment has the beneficial effects that the polymer enables the filtering performance of the slurry to be further optimized, and the flexibility of the electrode sheet is further improved.

In some implementations, at least one of $R_1$ and $R_3$ includes a polyether segment as represented by Formula IV:

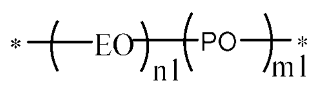
Formula IV.

EO represents $-CH_2-CH_2-O-$. PO represents $-CH(CH_3)-CH_2-O-$. $4 \leq m1 \leq 50$. $4 \leq n1 \leq 50$.

In some implementations, the polyether segment is a block copolymer segment. In some implementations, the polyether segment is a random copolymer segment.

In some implementations, m1 and n1 may be independently selected from 4, 5, 6, 7, 8, 9, 10, 11, 12, 13, 14, 15, 20, 25, 30, 35, 40, 45, or 50, or any number between any two of these numbers.

The polyether segment having the above structure has proper steric hindrance and a low glass transition temperature, which can more effectively reduce the degree of crystallographic order and glass transition temperature of the binder in the positive electrode slurry, thereby reducing the crystallinity of the binder, and improving the flexibility of the electrode sheet. Through the dispersion and flexibility improving effects, the uniformity and flexibility of the electrode sheet are improved, so that the safety performance and the ultimate compaction density of the battery can be improved. Therefore, the loading capacity of the positive electrode active material in the battery is improved, contributing to a further improvement in the energy density of the battery.

In some implementations, the terminal group of the polyether segment includes an aryl group.

The aryl group has excellent compatibility with a carbon layer on the surface of the positive electrode active material, so it is favorable for further improving the anchoring effect of the polymer and the carbon-modified positive electrode active material. Through the effective anchoring between the aryl group and the carbon on the positive electrode active material, the dispersion of anchoring sites of the polymer on the positive electrode active material can be improved. As a result, the application range of the polymer dispersant is further expanded, the maximum solid content of the slurry is

improved, and the forming quality of the electrode sheet is improved while reducing costs and improving efficiency at the same time.

In some implementations, X includes a phosphate group.

The phosphate-based polymer can more effectively improve the solid content of the slurry, shorten the filtering time, and improve the flexibility of the electrode sheet. In addition, the phosphate-based polymer has high stability, and can effectively improve the cycling capacity retention rate of the battery while improving the dispersibility of the slurry.

In some implementations, the polymer includes at least one of the following polymers as represented by the following formulas:

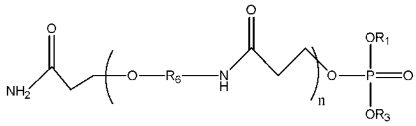 , 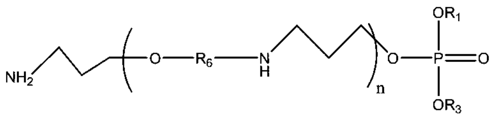 ,

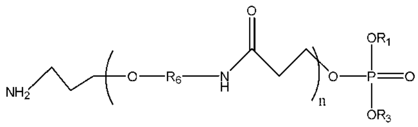 , 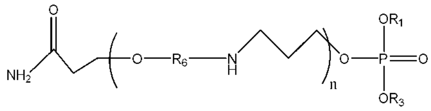 ,

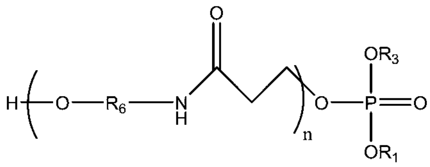 , 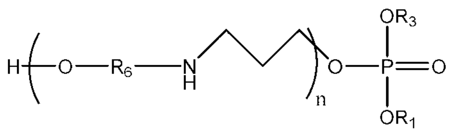 ,

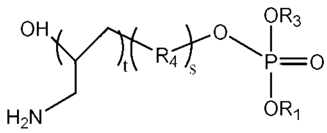 , 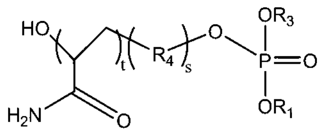 , 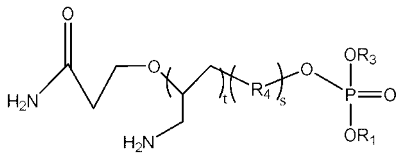 ,

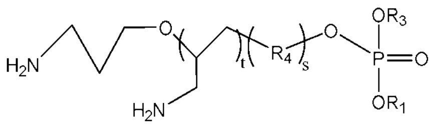 , 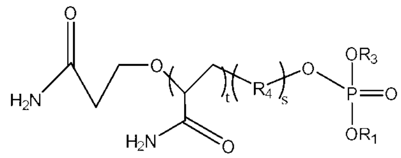 ,

and

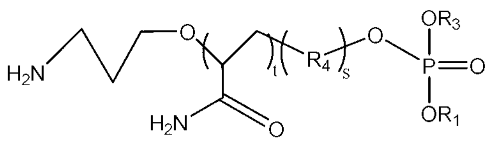 .

At least one of $R_1$ and $R_3$ includes a block copolymer polyether segment as represented by Formula IV:

$$*-\left(EO\right)_{n1}-\left(PO\right)_{m1}-*$$ Formula IV.

EO represents $-CH_2-CH_2-O-$. PO represents $-CH(CH_3)-CH_2-O-$. $4 \leq m1 \leq 15$. $4 \leq n1 \leq 15$.

In some implementations, $R_6$ and $R_4$ each independently include at least one of a $C_{4-8}$ alkylene group and a $C_{4-8}$ alkenylene group.

In some implementations, $R_6$ and $R_4$ each independently include at least one of $-(CH_2)_4-$, $-(CH_2)_5-$, $-(CH_2)_6-$, $-(CH_2)_7-$, $-(CH_2)_8-$, and

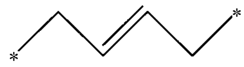

groups.

In some implementations, the terminal group of the polyether segment includes a phenyl group.

In some implementations, the polymer is as represented by the following formula:

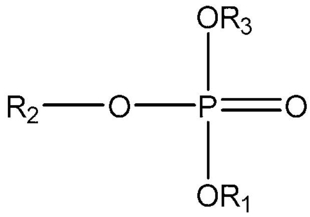

R2 includes at least one of hydrogen, an aryl group, a substituted or unsubstituted alkyl group, and an amino-group-containing or amide-group-containing organic segment. At least one of $R_1$ and $R_3$ includes a block copolymer polyether segment as represented by Formula IV:

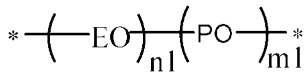
Formula IV.

EO represents $-CH_2-CH_2-O-$. PO represents $-CH(CH_3)$ $-CH_3-O-$. 4≤m1≤50. 4≤n1≤50. A terminal group of the polyether segment includes a phenyl group.

In some implementations, a weight-average molecular weight of the polymer is 1,000 to 10,000. In some implementations, the weight-average molecular weight of the polymer is 2,000 to 5,000.

The weight-average molecular weight has a well-known meaning in the art, and can be measured by a well-known method in the art. As an example, the weight-average molecular weight may be measured by gel chromatography.

In some implementations, the weight-average molecular weight of the polymer may be 1,000, 2,000, 3,000, 4,000, 5,000, 6,000, 7,000, 8,000, 9,000, or 10,000, or any value in between.

The polymer with the weight-average molecular weight in the above range can achieve the excellent dispersibility to further improve the solid content of the slurry, and can further endow the slurry with excellent flow performance, reducing the coating time, and improving the coating uniformity and speed. The polymer with the weight-average molecular weight being 2,000 to 5,000 can more effectively achieve the dispersion effect to improve the maximum solid content of the slurry, and shorten the filtering time.

According to a second aspect of the present application, a preparation method for a polymer is provided. The preparation method includes the following step:

a compound as represented by Formula VI is reacted with $R_3OH$, $R_1OH$, water, and an unsaturated-bond-containing polymerization monomer to prepare a polymer including a structure as represented by Formula I:

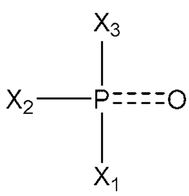
Formula VI

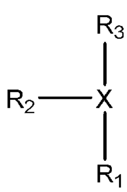
Formula I.

X includes a phosphate group or a phosphite group. Each of $X_1$, $X_2$ and $X_3$ includes halogen. $R_1$ and $R_3$ each independently include at least one of a polyether segment, a polyester segment, hydrogen and a hydrocarbon group. At least one of $R_1$ and $R_3$ includes a polyether segment or a polyester segment. $R_2$ includes an organic segment.

In this specification, the halogen includes at least one of fluorine, chlorine, bromine, and iodine.

In some implementations, phosphorus and oxygen in Formula VI are connected through a double bond. X in Formula I is a phosphate group.

In some implementations, Formula VI does not include oxygen. X in Formula I is a phosphite group.

In some implementations, Formula VI includes $POCl_3$ or $PCl_3$.

In some implementations, the preparation method includes the following steps:

the compound as represented by Formula is subjected to a first reaction with VI, $R_3OH$, $R_1OH$ and water to prepare an intermediate product as represented by Formula VII:

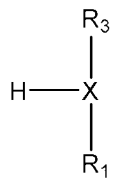
Formula VII;

and

the intermediate product is subjected to a second reaction is with a polymerization monomer including at least one of unsaturated-bond-containing amide and unsaturated-bond-containing amine to prepare the polymer.

In some implementations, the first reaction specifically includes:

Under stirring, $R_3OH$ is dropwise added into the compound as represented by Formula VI while maintaining a reaction temperature to be lower than 20°C. The temperature is raised to 40°C to 50°C after the stirring for a period time to react for 6 h to 7 h. Then, water is added. The reaction continues at 50°C to 60°C for 3 h to 4 h to acquire a first intermediate product as represented by Formula A. The molar ratio of the $R_3OH$ added in the reaction process and the compound as represented by Formula VI is 1.2 to 1.5. $R_3$ includes a $C_{1-4}$ alkyl group.

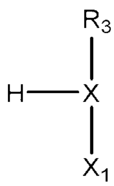
Formula A.

The above reaction conditions are favorable for improving the product purity.

In some implementations, the first reaction further includes:

the polyether is reacted with the first intermediate product at 100°C to 120°C for 4 h to 7 h to generate an intermediate product as represented by Formula VII. $R_1$ includes a polyether segment.

In some implementations, the second reaction specifically includes the following steps:

the intermediate product is subjected to an addition reaction with at least one of the unsaturated-bond-containing amide and the unsaturated-bond-containing amine, and then a substitution reaction with a halogen-substituted organic alcohol; and

the addition reaction and the substitution reaction are cycled for many times, and then the polymer is prepared.

$R_2$ includes a structure as represented by Formula III:

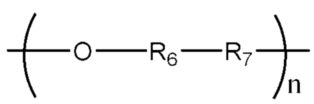
Formula III.

$R_6$ includes a $C_{2-12}$ hydrocarbon group. $R_7$ includes at least one of

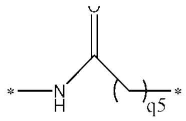

and

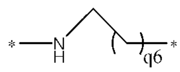.

q5 and q6 each independently include any integer between 0 and 4. 1≤n≤6.

The addition reaction refers to a reaction in which a $\pi$ bond in a double bond is broken to form two single bonds.

The substitution reaction refers to a type of chemical reaction in which an atom or group replaces an atom or group in an organic molecule and occupies a position thereof.

In some implementations, the preparation method further includes the following step:

the intermediate product is subjected to a third reaction with (i) at least one of unsaturated-bond-containing amide and unsaturated-bond-containing amine, and (ii) at least one of an unsaturated-bond-containing hydrocarbon monomer and a cyclic amide monomer to prepare the polymer. $R_2$ includes a structure as represented by Formula II:

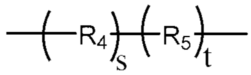 Formula II.

$R_4$ and $R_5$ are randomly copolymerized. $R_4$ includes at least one of a $C_{2-12}$ hydrocarbon group, and a $C_{3-13}$ amide group. $R_5$ includes at least one of

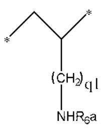, 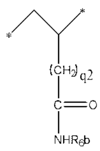, 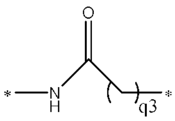, and 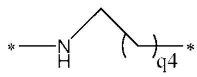.

q1, q2, q3, and q4 each independently include any integer between 0 and 4. $R_6^a$ and $R_6^b$ include at least one of hydrogen and a $C_{1-4}$ alkyl group. 1≤s≤6. 1≤t≤10.

In some implementations, the unsaturated-bond-containing hydrocarbon monomer includes at least one of an olefin monomer, an alkyne monomer, and cyclic alkane.

In some implementations, the cyclic amide monomer refers to a cyclic monomer including an amido bond.

In some implementations, the third reaction specifically includes: the intermediate product is mixed with the at least one of the unsaturated-bond-containing hydrocarbon monomer and the cyclic amide monomer for reaction for a period of time, and then, at least one of the unsaturated-bond-containing amide and unsaturated-bond-containing amine are added for a copolymerization reaction.

In some implementations, the preparation method further includes the following step:
the polymer with terminal group being a hydroxyl group was subjected to an end capping reaction with the unsaturated monomer containing an amide group or an amino group to prepare the polymer with terminal group including the amide group or the amino group.

The present application provides a preparation method for a polymer. The preparation method includes the following step:

a compound as represented by Formula VI is reacted with a raw material including $R_3OH$ and $R_1OH$ to prepare a polymer including a structure as represented by Formula I:

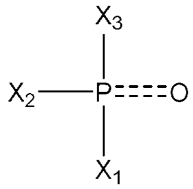

Formula VI

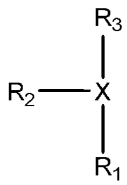

Formula I.

X includes a phosphate group or a phosphite group. Each of $X_1$, $X_2$ and $X_3$ includes halogen. $R_1$ and $R_3$ each independently include at least one of a polyether segment, a polyester segment, hydrogen and a hydrocarbon group. At least one of $R_1$ and $R_3$ includes a polyether segment. A terminal group of at least one of the polyether segments includes an aryl group. $R_2$ includes an organic segment.

In some implementations, the monomer as represented by Formula VI is reacted with $R_1OH$ and $R_3OH$ in an inert and alkaline environment, followed by the addition of water or phenol for reaction to obtain the polymer.

In some implementations, the polymer with R2 including the hydroxyl group is continuously subjected to a second reaction with a polymerization monomer including at least one of the unsaturated-bond-containing amide and unsaturated-bond-containing amine to prepare the polymer with R2 including nitrogen.

In some implementations, the polymer according to any one implementation of the present application or the polymer prepared by the preparation method according to any one implementation of the present application is used as a dispersant.

In some implementations, the polymer according to any one implementation of the present application or the polymer prepared by the preparation method according to any one implementation of the present application is used as a dispersant in an electrode sheet slurry of a secondary battery.

In some implementations, the polymer according to any one implementation of the present application or the polymer prepared by the preparation method according to any one implementation of the present application is used as a dispersant in a positive electrode slurry of a secondary battery.

[Positive electrode slurry]

According to a third aspect of the present application, a positive electrode slurry is provided. The positive electrode slurry includes a dispersant. The dispersant includes the polymer according to any one implementation or the polymer prepared by the preparation method according to any one implementation.

The positive electrode slurry has high solid content, and is favorable for improving the forming efficiency and quality of the positive electrode film layer and improving the electrochemical performance and processing efficiency of the battery.

In some implementations, the positive electrode slurry includes a positive electrode active material. The positive electrode active material includes at least one of a lithium-containing phosphate and a carbon-modified material thereof.

In some implementations, the lithium-containing phosphate includes at least one of lithium iron phosphate and a doping material thereof, and lithium iron manganese phosphate and a doping material thereof. In some implementations, the doping material includes a doping material at any one site. The doping is optionally lithium site doping, phosphorus site doping, manganese site doping, and iron site doping.

In some implementations, the carbon-modified material includes at least one of a carbon-coated material and a carbon-doped material.

In some implementations, the positive electrode active material includes at least one of lithium iron phosphate and a doping material thereof, lithium iron manganese phosphate and a doping material thereof, a carbon-coated material of lithium iron phosphate and a doping material thereof, and a carbon-coated material of lithium iron manganese phosphate and a doping material thereof.

The polymer is negatively charged, and can further enhance the mutual anchoring with weakly acidic lithium-containing phosphate through electrostatic interaction to further improve the dispersion effect of the polymer on the lithium-containing phosphate. In addition, the lithium-containing phosphate has poor electrical conductivity. Therefore, in a

preparation process of the positive electrode active material, coating a carbon layer by sintering an organic material such as glucose or sucrose is generally used to improve the electrical conductivity. Moreover, the polymer has a group anchored to the carbon coating layer, and also achieves an excellent dispersion effect on the carbon-modified lithium-containing phosphate, which can further improve the dispersibility of the slurry, thereby improving the maximum solid content of the slurry.

In some implementations, the positive electrode active material includes a core and a carbon coating layer, the carbon coating layer at least covers a part of surface of the core, and the molar ratio of $sp^2$ hybridized carbon atoms to $sp^3$ hybridized carbon atoms in the carbon coating layer is not smaller than 0.2. In some implementations, the molar ratio of $sp^2$ hybridized carbon atoms to $sp^3$ hybridized carbon atoms in the carbon coating layer is not smaller than not smaller than 0.5. In some implementations, the molar ratio of $sp^2$ hybridized carbon atoms to $sp^3$ hybridized carbon atoms in the carbon coating layer is not smaller than not smaller than 0.8.

In some implementations, the molar ratio of sp2 hybridized carbon atoms to $sp^3$ hybridized carbon atoms in the carbon coating layer optionally 0.2, 0.3, 0.4, 0.5, 0.6, 0,7, 0.8, or 0.9, or in a value range between any two of these values.

The carbon structure and features of the carbon coating layer may be determined by a well-known method in the art. As an example, Raman spectroscopy may be used for determination. Specifically, a Raman spectrum of the positive active material is measured first, and peak deconvolution is performed on an energy spectrum of the Raman test to obtain Ig/Id (Id is a peak intensity of $sp^3$ hybridized carbon atoms, Ig is a peak intensity of $sp^2$ hybridized carbon atoms, and the peak intensity ratio is a peak height ratio of $sp^2$ hybridized carbon atoms to $sp^3$ hybridized carbon atoms), so that the molar ratio of $sp^2$ hybridized carbon to $sp^3$ hybridized carbon is acquired. The molar ratio of $sp^2$ hybridized carbon atoms to $sp^3$ hybridized carbon atoms in the carbon coating layer of the positive electrode active material is not particularly limited. For example, the molar ratio of $sp^2$ hybridized carbon atoms to $sp^3$ hybridized carbon atoms in the carbon coating layer may be not smaller than 0.5. In some embodiments, the molar ratio of $sp^2$ hybridized carbon atoms to $sp^3$ hybridized carbon atoms in the carbon coating layer may be not smaller than 0.8. In a case that the molar ratio of $sp^2$ hybridized carbon atoms to $sp^3$ hybridized carbon atoms in the carbon coating layer is in the above range, the carbon coating layer on the surface of the core has a high graphitization degree, and the structure of the carbon coating layer is compacter, which not only can reduce the water absorption performance of the carbon coating layer, but also can achieve good electrical conductivity of the carbon coating layer and ensure a lithium-ion path, favorably improving the cycling performance and safety performance of the positive electrode active material.

In some implementations, the core includes phosphate. In some implementations, the phosphate includes at least one of lithium manganese phosphate, lithium iron phosphate, lithium iron manganese phosphate and a doping material thereof.

By forming the carbon coating layer on the surface of the core, the electrical conductivity of the positive electrode active material can be improved. When the molar ratio of the $sp^2$ hybridized carbon atoms to the $sp^3$ hybridized carbon atoms in the carbon coating layer on the surface of the core is not smaller than 0.5, the orderliness of the carbon coating layer of the positive electrode active material is higher. As a result, a pore structure of the carbon coating layer has high compactness and a small pore size distribution range. Therefore, in a battery production process, external water is difficult to enter pores of the carbon coating layer, so that the water absorption performance and water storage performance of the positive electrode active material are effectively reduced, the safety performance and cycling performance of the battery are improved, the energy consumption in the drying process is effectively reduced, and the production cost is obviously reduced.

However, the carbon coating layer with the molar ratio of the $sp^2$ hybridized carbon atoms to the $sp^3$ hybridized carbon atoms being not smaller than 0.5 has a high graphitization degree, so that the positive electrode active material is easy to agglomerate, and is difficult to effectively disperse in a slurry preparation process. The dispersant provided by embodiments of the present application and the carbon coating layer with high graphitization degree have rich anchoring groups, and are particularly applicable to dispersion of the positive electrode active material having the coating layer with high graphitization degree. Through the cooperation of the dispersant and the carbon coating layer, the use performance and processing performance of the battery can be improved at the same time.

In some implementations, the core includes $Li_{1+x}Mn_{1-y}A_yP_{1-z}R_zO_4$. x is any value in a range of -0.100 to 0.100. y is any value in a range of 0.001 to 0.500. z is any value in a range of 0.001 to 0.100. A includes one or more elements of Zn, Zn, Al, Na, K, Mg, Mo, W, Ti, V, Zr, Fe, Ni, Co, Ga, Sn, Sb, Nb, and Ge. R includes one or more elements of B, S, Si, and N. A manganese site doping element A selected from the above elements is favorable for decreasing the lattice change rate of lithium manganese phosphate of the material in lithium intercalation and deintercalation processes, improving the structure stability of the positive electrode active material, greatly reducing the dissolution of manganese, and reducing the oxygen activity on particle surfaces. A phosphorus site doping element R selected from the above elements is favorable for changing the difficulty degree of the Mn-O bond length change, so that the electrical conductivity of electron is improved, the lithium ion migration barrier is reduced, the lithium ion migration is promoted, and the rate capability of the secondary battery is improved.

Unless otherwise specified, in the above formulas of the core, when there are two or more elements in a doping

site, the above limitation to a value range of x, y, z, or m is not only a limitation to a stoichiometric number of each element at this site, and is also a limitation to a stoichiometric number sum of each element at this site. For example, when there is a compound having a chemical formula of $Li_{1+x}Mn_{1-y}AyP_{1-z}R_zO_4$, in a case that A includes two or more elements A1, A2 to An, the respective stoichiometric numbers y1, y2 to yn of A1, A2 to An shall respectively fall within the value range of the present invention limited for y. Additionally, the sum of y1, y2 to yn shall also fall within the value range. Similarly, in a case that R includes two or more elements, the limitation to the value range of the stoichiometric number of R also has the above meaning.

According to some embodiments of the present application, the type of the core is not particularly limited. For example, the core may include $Li_{1+x}C_mMn_{1-y}A_yP_{1-z}R_zO_{4-n}D_n$. The value of x is determined by the valence states of A and R and the values of y and z to ensure the charge neutrality in the overall system. If the value of x is too small, the lithium content of the overall core system may be reduced, affecting the gravimetric capacity of the material. More specifically, x is any value in a range of-0.100 to 0.100. y is any value in a range of 0.001 to 0.500. z is any value in a range of 0.001 to 0.100. n is any value in a range of 0.001 to 0.1. m is any value in a range of 0.9 to 1.1. For example, 1+x is selected from a range of 0.9 to 1.1, and for example, is 0.97, 0.977, 0.984, 0.988, 0.99, 0.991, 0.992, 0.993, 0.994, 0.995, 0.996, 0.997, 0.998, or 1.01. x is selected from a range of 0.001 to 0.1, and for example, is 0.001, or 0.005. y is selected from a range of 0.001 to 0.5, and for example, is 0.001, 0.005, 0.02, 0.05, 0.1, 0.15, 0.2, 0.25, 0.3, 0.34, 0.345, 0.349, 0.35, or 0.4. z is selected from a range of 0.001 to 0.1, and for example, is 0.001, 0.005, 0.08, or 0.1. n is selected from a range of 0.001 to 0.1, and for example, is 0.001, 0.005, 0.08, or 0.1. The positive electrode active material is electrically neutral. C includes one or more elements of Zn, Al, Na, K, Mg, Nb, Mo, and W. A includes one or more elements of Zn, Al, Na, K, Mg, Mo, W, Ti, V, Zr, Fe, Ni, Mg, Co, Ga, Sn, Sb, Nb, and Ge. R includes one or more elements of B (boron), S, Si, and N. D includes one or more elements of S, F, Cl, and Br. By doping a specific quantity of specific elements in an Li site, a Mn site, a P site and an O site of the compound at the same time, the rate capability that is obviously improved can be achieved. At the same time, the dissolution of Mn and Mn site doping elements is obviously reduced, the cycling performance and/or high-temperature stability that are/is obviously improved are/is obtained. In addition, the gravimetric capacity and the compaction density of the positive electrode active material can also be improved.

In some implementations, the thickness of the carbon coating layer is not greater than 15 nm. In some implementations, the thickness of the carbon coating layer is not greater than 10 nm. In some implementations, the thickness of the carbon coating layer is 4 nm to 8 nm.

In some embodiments, the thickness of the carbon coating layer is optionally 4 nm, 5 nm, 6 nm, 7 nm, 8 nm, 9 nm, 10 nm, 11 nm, 12 nm, 13 nm, 14 nm, 15 nm, or in a value range between any two of these values.

The thickness of the carbon coating layer may be determined according to the following method: a thin slice with the thickness about 100 nm is cut from the middle of a single particle of the positive electrode active material through FIB, then, the thin slice is subjected to transmission electron microscopy (TEM) test to obtain an original TEM test image, and the original image is saved in the format of (xx.dm3). The original image acquired through the TEM test is opened in a Digital Micrograph software. The carbon coating layer is recognized through lattice spacing and included angle information. The thickness of the carbon coating layer is measured. The thicknesses of three positions of the selected particle are measured and an average value is calculated.

A carbon coating layer within the above thickness range can effectively improve the electrical conductivity of the positive electrode active material by forming a relatively thin carbon coating layer on the surface of the core, and can improve the compaction performance during preparation of the battery electrode sheet from the positive electrode active material may be improved.

In some implementations, the positive electrode active material is prepared by the following method:
a core is provided; and a carbon coating layer is formed on at least a part of surface of the core. The molar ratio of sp2 hybridized carbon atoms to sp3 hybridized carbon atoms in the carbon coating layer is not smaller than 0.2, and optionally not smaller than 0.5.

In some implementations, that a carbon coating layer is formed on at least a part of the surface of the core includes: a carbon pre-coating layer is formed on the surface of the core through a carbon source to acquire a pre-coated positive electrode active material; and the pre-coated positive electrode active material is subjected to sintering treatment to form the carbon coating layer so as to obtain the positive electrode active material. The carbon source includes a first carbon source and a second carbon source.

In some implementations, the carbon pre-coating layer is formed on the surface of the core to obtain the pre-coated positive electrode active material. The method of forming the carbon pre-coating layer on the surface of the core is not particularly limited. For example, the carbon source and the core may be placed into a same reaction vessel. The carbon source may react with the surface of the core through hydro-thermal treatment. Therefore, the carbon coating layer is formed on the surface of the core. The carbon source and the core may also be placed into a ball milling device, such as a sand mill, so that the carbon source forms the carbon coating layer on the surface of the core through mechanical mixing. In some implementations, the carbon source includes a first carbon source and a second carbon source. The first carbon source includes at least one of polyvinyl alcohol, polyethylene glycol, and citric acid. The second carbon source includes at

least one of starch, sucrose, and glucose. In some embodiments, the molecular weight of the first carbon source is not smaller than 1,000. In some other implementations, the molecular weight of the first carbon source may be 2,000 to 5,000. Therefore, the carbon pre-coating layer with uniform distribution and consistent thickness can be formed on the surface of the core through ball milling treatment, thereby facilitating the formation of a compact and uniform carbon coating layer pore structure after the sintering treatment. In some implementations, the second carbon source may include at least one of starch, sucrose, and glucose. In some embodiments, the second carbon source may be glucose.

In some implementations, the pre-coated positive electrode active material is subjected to sintering treatment in an inert gas atmosphere. In some implementations, the pre-coated positive electrode active material is subjected to sintering treatment to obtain the positive electrode active material. The sintering treatment shall be performed in an inert atmosphere, so as to avoid the oxidation reaction of the carbon source, which would otherwise hinder the formation of a carbon coating layer with high graphitization degree. The type of the inert gas is not particularly limited. For example, the inert gas may include at least one of nitrogen gas and helium gas. The condition of the sintering treatment is not particularly limited. For example, the temperature of the sintering treatment may be 650°C to 800°C. The time of the sintering treatment may be 6 h to 12 h. Therefore, the carbon coating layer with high graphitization degree can be formed on the surface of the core. As the temperature of the sintering treatment increases, the graphitization degree of carbon in the carbon coating layer will also increase. The graphitization degree of the carbon coating layer can be effectively controlled by controlling the highest sintering treatment of the sintering treatment, enabling the carbon coating layer to have a dense pore structure and excellent electrical conductivity.

In some implementations, that the carbon coating layer is formed on at least a part of the surface of the core includes: the core is mixed with the first carbon source, a first coated positive electrode active material is obtained through first sintering treatment, the first coated positive electrode active material is mixed with the second carbon source, and the positive electrode active material is obtained through second sintering treatment.

In some implementations, the temperature of the first sintering treatment is 350°C to 800°C. The time of the first sintering treatment is 6 h to 12 h. In some implementations, the temperature of the second sintering treatment is 650°C to 850°C. The time of the second sintering treatment is 6 h to 24 h.

In some implementations, based on the total mass of the dry material of the positive electrode slurry, the mass content of the polymer is 0.1% to 2.0%. In some implementations, based on the total mass of the dry material of the positive electrode slurry, the mass content of the polymer is 0.2% to 1.0%.

In some implementations, based on the total mass of the dry material of the positive electrode slurry, the mass content of the polymer optionally 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, or 2.0 %, or any value in between. The polymer in the above range can achieve an effective dispersion effect, and can further take the volume energy density of the battery into consideration without causing serious negative influence on the electrochemical performance of the battery.

In some implementations, the positive electrode slurry includes a binder. The binder includes a vinylidene fluoride polymer with a weight-average molecular weight not smaller than 300,000. In some implementations, the weight-average molecular weight of the binder is 700,000 to 9,000,000.

In some implementations, the vinylidene fluoride polymer is a vinylidene fluoride homopolymer.

In some implementations, the vinylidene fluoride polymer is a vinylidene fluoride copolymer.

The weight-average molecular weight has a well-known meaning in the art, and may be measured by any one well-known method. In some implementations, the weight-average molecular weight of the binder is characterized by gel chromatography.

In some embodiments, the weight-average molecular weight of the binder optionally 700,000, 1,000,000, 2,000,000, 3,000,000, 4,000,000, 5,000,000, 6,000,000, 7,000,000, 8,000,000, or 9,000,000, or any value in between.

The vinylidene fluoride polymer with the weight-average molecular weight in this range has excellent bonding performance and electrochemical stability. Using the vinylidene fluoride polymer with the weight-average molecular weight being 700,000 to 9,000,000 can further reduce the consumption of vinylidene fluoride, reduce the rigidity of the positive electrode film layer, and improve the flexibility of the electrode sheet to further improve the ultimate compaction density of the battery, contributing to the improvement of the energy density of the battery.

In some implementations, the maximum solid content of the positive electrode slurry is not lower than 60%. In some implementations, the maximum solid content of the positive electrode slurry is 60% to 80%.

The maximum solid content of the positive electrode slurry refers to the maximum solid content of the slurry that simultaneously satisfies the conditions of as-delivered viscosity between 4,000-35,000 mpa·s and no gelation after 24-hour still standing. A method for measuring the actual solid content of the positive electrode slurry is as follows: the slurry is weighed (recorded as $m_0$) and placed in a weight loss rate test instrument; a solvent is evaporated from the slurry till a weight loss rate is lower than 0.3%, and the remaining weight is recorded as $m_1$; and the solid content = $m_1$/ $m_0$*100%.

In some implementations, the maximum solid content of the positive electrode slurry is optionally 60%, 65%, 70%, 75%, or 80%, or any value in between.

By adding the polymer to the positive electrode slurry, the solid content and the flexibility of the slurry are

effectively improved, thereby improving the flexibility and the forming efficiency of the electrode sheet.

[Positive electrode sheet]

The present application further provides a positive electrode sheet. The positive electrode sheet includes a positive electrode film layer. The positive electrode film layer is prepared from the positive electrode slurry according to any one implementation. Or the positive electrode film layer includes a dispersant. The dispersant includes the polymer according to any one implementation or the polymer prepared by the preparation method according to any one implementation.

In some implementations, the positive electrode film layer is disposed on either or both of two opposite surfaces of the positive electrode current collector.

In some implementations, the positive electrode current collector may use a metal foil or a composite current collector. For example, an aluminum foil may be used as the metal foil. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver, silver alloy, etc.) on a polymer material substrate (for example, a substrate of polypropylene (PP), polyethylene terephthalate (PET), polybutylene terephthalate (PBT), polystyrene (PS), polyethylene (PE), etc.).

In some implementations, the number of foldings of the positive electrode sheet at a compaction density of 2.6 g/cm$^3$ is not smaller than 2. In some implementations, the number of foldings of the positive electrode sheet at a compaction density of 2.6 g/cm$^3$ is 3 to 6.

The number of foldings of the positive electrode sheet at the compaction density of 2.6 g/cm$^3$ can be used for characterizing the flexibility of the electrode sheet, and can be measured by any one well-known method. As an example, a non-defective positive electrode sheet with a compaction density of 2.6 g/cm$^3$ is taken and longitudinally cut into samples ($\geq$4) in a length*width size of 25 cm*4 cm, the samples are pre-folded in a longitudinal direction (25 cm direction) at first, and then, a film is placed onto a test platform to be rolled once by a 2 kg cylindrical press roller. If there is light transmittance, the number of brittleness light transmittance is counted as 1. If there is no light transmittance, the reverse folding and rolling are repeated. Folding creases are observed against the light to check for light transmittance or fracture. The actual number of foldings is recorded. The test is performed for 4 times. An average number is taken as a test result.

In some implementations, the number of foldings of the positive electrode sheet at a compaction density of 2.6 g/cm$^3$ is 2, 3, 4, 5, or 6.

The polymer can effectively improve the solid content of the slurry, and can also serve as a flexible enhancer to improve flexibility of the positive electrode sheet, further improving the safety performance and electrochemical performance of the battery.

In some implementations, the areal density of the positive electrode sheet is not lower than 300 mg/1,540.25 cm$^2$. In some implementations, the areal density of the positive electrode sheet is 300 mg/1,540.25 cm$^2$ to 600 mg/1,540.25 cm$^2$.

In some implementations, the areal density of the positive electrode sheet is 300 mg/1,540.25 cm$^2$, 400 mg/1,540.25 cm$^2$, 450 mg/1,540.25 cm$^2$, 500 mg/1,540.25 cm$^2$, or 600 mg/1,540.25 cm$^2$, or any value in between. The areal density of the electrode sheet has a well-known meaning, and may be measured by using any one well-known method.

In some implementations, the positive electrode sheet includes lithium iron phosphate. The areal density of the positive electrode sheet is not lower than 360 mg/1,540.25 cm$^2$. In some implementations, the areal density of the positive electrode sheet is 360 mg/1,540.25 cm$^2$ to 600 mg/1,540.25 cm$^2$.

In some implementations, the positive electrode sheet includes lithium manganese iron phosphate. The areal density of the positive electrode sheet is not lower than 300 mg/1,540. 25 cm$^2$. In some implementations, the areal density of the positive electrode sheet is 300 mg/1,540.25 cm$^2$ to 600 mg/1,540.25 cm$^2$.

The polymer can effectively improve the maximum solid content of the slurry, so that the coating speed is accelerated by 30% or more. It is particularly applicable to high-speed coating and thick coating. Moreover, it effectively solves the problem that an electrode sheet is easy to crack in the thick coating process, facilitating the preparation of the positive electrode sheet having high flexibility and having no crack after winding and forming.

In some implementations, the positive electrode film layer includes a dispersant. The dispersant includes a structure as represented by Formula I:

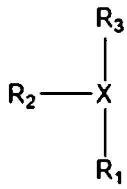

Formula I.

X includes a phosphate group or a phosphite group. $R_1$ and $R_3$ each independently include at least one of a polyether segment, a polyester segment, hydrogen and a hydrocarbon group. At least one of $R_1$ and $R_3$ includes a polyether segment or a polyester segment. $R_2$ includes an organic segment. Optionally, the organic segment of $R_2$ includes at least one of an amide group and an amino group. Optionally, a terminal group of the polyether segment includes an aryl group. Optionally, the positive electrode active material includes at least one of lithium iron phosphate and a doping material thereof, lithium iron manganese phosphate and a doping material thereof, a carbon-coated material of lithium iron phosphate and a doping material thereof, and a carbon-coated material of lithium iron manganese phosphate and a doping material thereof. Optionally, the positive electrode active material includes at least one of lithium iron manganese phosphate and a doping material thereof, and a carbon-coated material of lithium iron manganese phosphate and a doping material thereof. Based on the total mass of the positive electrode film layer, the mass content of the dispersant is 0.1% to 2.0%, and optionally 0.2% to 1.0%.

The positive electrode film layer has good dispersibility and processability, and is favorable for synchronously improving the manufacturing efficiency and the battery performance. In some implementations, the positive electrode film layer also optionally includes a conductive agent. As an example, the conductive agent may include at least one of superconducting carbon, acetylene black, carbon black, Ketjen black, carbon dots, carbon nanotubes, graphene, and carbon nanofibers.

In some implementations, the positive electrode sheet may be prepared in the following manner: the above components for preparing the positive electrode sheet, for example, the positive electrode active material, the conductive agent, the binder, and the dispersant are dispersed into a solvent (for example, N-methylpyrrolidone) to form a positive electrode slurry; and the positive electrode slurry is coated onto the positive electrode current collector to obtain the positive electrode sheet through working procedures of drying, cold pressing, etc.

[Negative electrode sheet]

A negative electrode sheet includes a negative electrode current collector and a negative electrode film layer disposed on at least one surface of the negative electrode current collector. The negative electrode film layer includes a negative electrode active material.

As an example, the negative electrode current collector has two surfaces opposite in its own thickness direction. The negative electrode film layer is disposed on either or both of the two opposite surfaces of the negative electrode current collector.

In some implementations, the negative electrode current collector may use a metal foil or a composite current collector. For example, a copper foil may be used as the metal foil. The composite current collector may include a polymer material base layer and a metal layer formed on at least one surface of a polymer material substrate. The composite current collector may be formed by forming a metal material (copper, copper alloy, nickel, nickel alloy, titanium, titanium alloy, silver, silver alloy, etc.) on the polymer material substrate (for example, a substrate of polypropylene (PP), polyethylene terephthalate (PET), polybutylene terephthalate (PBT), polystyrene (PS), polyethylene (PE), etc.).

In some implementations, the negative electrode active material may use a negative electrode active material used for batteries well-known in the art. As an example, the negative electrode active material may include at least one of the following materials: artificial graphite, natural graphite, soft carbon, hard carbon, a silicon-based material, a tin-based material, lithium titanate, etc. The silicon-based material may be at least one selected from elemental silicon, silicon oxide, a silicon-carbon composite, a silicon-nitrogen composite, and silicon alloy. The tin-based material may be at least one selected from elemental tin, tin oxide, and tin alloy. However, the present application is not limited to such materials. Other conventional materials capable of being used as a negative electrode active material for batteries may also be used. These negative electrode active materials may be used individually or two or more of them may be used in combination.

In some implementations, the negative electrode film layer also optionally includes a binder. The binder may be at least one selected from styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some implementations, the negative electrode film layer also optionally includes a conductive agent. The conductive agent may be at least one selected from superconducting carbon, acetylene black, carbon black, Ketjen black, carbon dots, carbon nanotubes, graphene, and carbon nanofibers.

In some implementations, the negative electrode film layer also optionally includes another adjuvant, such as a thickener (for example, sodium carboxymethyl cellulose (CMC-Na)).

In some implementations, the negative electrode sheet may be prepared in the following manner: the above components for preparing the negative electrode sheet, for example, the negative electrode active material, the conductive agent, the binder and any other components are dispersed into a solvent (such as deionized water) to form a negative electrode slurry; and the negative electrode slurry is coated onto the negative electrode current collector to obtain the negative electrode sheet after working procedures of drying, cold pressing, etc.

[Electrolyte]

The electrolyte functions to conduct ions between the positive electrode sheet and the negative electrode sheet. The type of the electrolyte is not specifically limited in the present application. It may be selected according to requirements. For example, the electrolyte may be liquid, gelled, or all solid.

In some implementations, the electrolyte uses an electrolyte solution. The electrolyte solution includes an electrolyte salt and a solvent.

In some implementations, the electrolyte salt may be at least one selected from lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium triflate, lithium difluorophosphate, lithium difluoro(oxalato)borate, lithium bis(oxalato)borate, lithium difluorobis(oxalato)phosphate, and lithium tetrafluoro(oxalato)phosphate.

In some implementations, the solvent may be at least one selected from ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some implementations, the electrolyte solution also optionally includes an additive. For example, the additive may include a negative electrode film-forming additive and a positive electrode film-forming additive, and may further include an additive capable of improving some properties of the battery, for example, an additive capable of improving the overcharging property of the battery, an additive capable of improving the high-temperature or low-temperature property of the battery, etc.

[Separator]

In some implementations, the secondary battery further includes a separator. The type of the separator is not particularly limited in the present application. Any well-known separator of a porous structure having good chemical stability and mechanical stability may be selected and used.

In some implementations, the material of the separator may be at least one selected from glass fiber, non-woven fabric, polyethylene, polypropylene, or polyvinylidene fluoride. The separator may be a single-layer film or a multilayer composite film without particular limitation. In a case that the separator is a multilayer composite film, the materials of each layer may be the same or different without particular limitation.

In some implementations, the positive electrode sheet, the negative electrode sheet, and the separator may be made into an electrode assembly by a winding process or a lamination process.

In some implementations, the secondary battery may include an outer packaging. The outer packaging may be used for encapsulating the electrode assembly and the electrolyte above.

In some implementations, the outer packaging of the secondary battery may be a hard shell, such as a hard plastic shell, an aluminum shell, and a steel shell. The outer packaging of the secondary battery may also be a soft packaging, such as a bag type soft packaging. The material of the soft packaging may be plastics. Examples of the plastics may include polypropylene, polybutylene terephthalate, polybutylene succinate, etc.

[Secondary battery]

According to another aspect of the present application, a secondary battery is provided, and includes the positive electrode sheet according to any one implementation.

The shape of the secondary battery is not particularly limited in the present application. The secondary battery may be in a cylindrical shape, a square shape, or any other shape. For example, FIG. 2 shows a secondary battery 5 of a square structure as an example. The secondary battery may further be a sodium-ion battery, a magnesium-ion battery, or a potassium-ion battery.

In some implementations, referring to FIG. 3, the outer packaging may include a housing 51 and a cover plate 53. The housing 51 may include a bottom plate and a side plate connected to the bottom plate. An accommodating cavity is

enclosed by the bottom plate and the side plate. The housing 51 is provided with an opening communicating with the accommodating cavity. The cover plate 53 can cover the opening to close the accommodating cavity. The positive electrode sheet, the negative electrode sheet, and the separator may be made to form an electrode assembly 52 by a winding process or a lamination process. The electrode assembly 52 is encapsulated in the accommodating cavity. An electrolyte solution infiltrates into the electrode assembly 52. The quantity of electrode assembly 52 included in the secondary battery 5 may be one or more. It may be selected by those skilled in the art according to specific practical requirements.

[Battery module]

In some implementations, the secondary battery may be assembled into a battery module. The quantity of the secondary batteries included in the battery module may be one or more. The specific quantity may be selected by those skilled in the art according to the application and capacity of the battery module.

FIG. 4 shows a battery module 4 as an example. Referring to FIG. 4, in the battery module 4, a plurality of secondary batteries 5 may be sequentially arranged in a length direction of the battery module 4. Of course, the secondary batteries may also be arranged in any other manners. The plurality of secondary batteries 5 may further be fixed through a fastener.

Optionally, the battery module 4 may further include a shell with an accommodating space. The plurality of secondary batteries 5 may be accumulated in the accommodating space.

[Battery pack]

In some implementations, the battery module may further be assembled into a battery pack. The quantity of battery modules included in the battery pack may be one or more. The specific quantity may be selected by those skilled in the art according to the application and capacity of the battery pack.

FIG. 5 and FIG. 6 show a battery pack 1 as an example. Referring to FIG. 5 and FIG. 6, the battery pack 1 may include a battery box and a plurality of battery modules 4 disposed in the battery box. The battery box includes an upper box body 2 and a lower box body 3. The upper box body 2 can cover the lower box body 3 to form a closed space for accommodating the battery modules 4. The plurality of battery modules 4 may be arranged in the battery box in any manner.

[Electrical device]

In an implementation of the present application, an electrical device is provided, and includes at least one of a secondary battery according to any one implementation, a battery module according to any one implementation, or a battery pack according to any one implementation.

The electrical device includes at least one of the secondary battery, the battery module, or the battery pack provided in the present application. The secondary battery, the battery module, or the battery pack may be used as a power source of the electrical device, and may also be used as an energy storage unit of the electrical device. The electrical device may include but is not limited to a mobile device (for example, a mobile phone or a laptop), an electric vehicle (for example, an all-electric vehicle, a hybrid electric vehicle, a plug-in hybrid electric vehicle, an electric bicycle, an electric scooter, an electric golf cart, or an electric truck), an electric train, a ship, a satellite, an energy storage system, etc.

The secondary battery, the battery module, or the battery pack may be selected according to the use requirements of the electrical device.

FIG. 7 shows an electrical device as an example. The electrical device is an all-electric vehicle, a hybrid electric vehicle, or a plug-in hybrid electric vehicle, etc. In order to meet the requirements of the electrical device on high power and high energy density of the secondary battery, the battery pack or the battery module may be used.

The device as another example may be a mobile phone, a tablet computer, a laptop, etc. The device generally requires a thin and lightweight design, and may use the secondary battery as a power source.

Embodiments

Embodiments of the present application will be described hereinafter. The following described embodiments are exemplary, and are merely intended to describe the present application but cannot be construed as a limitation to the present application. If the specific technology or conditions are not specified in the embodiments, the technology or conditions described in the literature in the art or the product manual shall be followed. The used reagents or instruments without manufacturer indicated are all conventional products that may be purchased in the market.

Embodiment 1

(1) Dispersant preparation

Preparation of first intermediate product

$POCl_3$ was added into a four-neck flask provided with a temperature indicator, a stirrer and a hydrogen chloride gas collector, $R_3OH$ was dropwise added in a stirring state. A reaction temperature was kept to be lower than 20°C. After the stirring for 20 min, the temperature was raised to 40°C to 50°C, where a ratio of $n(POCl_3):n(R_3\text{-}OH)$ was 1.2 to 1.5. After the reaction for 6 h to 7 h, a certain amount of distilled water was added into a system. Reaction was performed at 55°C for 3.5 h to prepare a first intermediate product. By controlling reaction parameters, the yield of the first intermediate product can be made ≥ 95%. $R_3$ was - $CH_2CH_3$.

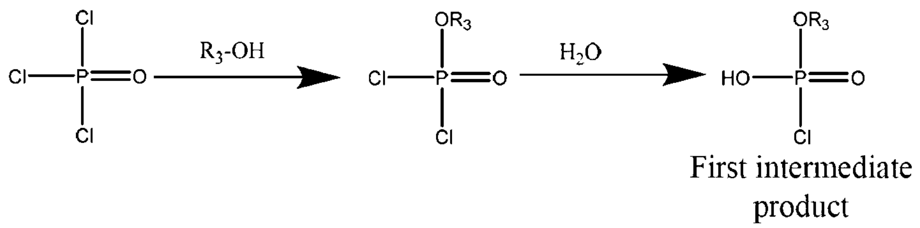


Preparation of second intermediate product

1,2-Propanediol (0.4% of the total mass of ethylene oxide, propylene oxide monomers, and the first intermediate product), and concentrated sulfuric acid (0.3% of the total mass) were weighed, and put into a reaction kettle. A lid of the reaction kettle was then closed. A fixing screw bolt was tightened with a wrench. The reaction kettle was subjected to vacuum evacuation. Replacement was performed for 3 times by high-purity nitrogen gas. Ethylene oxide and propylene oxide were sequentially added at a molar ratio of $n_2:m_2$ for a block polymerization reaction. In the reaction process, a pressure was kept at 0.3 +/- 0.05 MPa and the temperature was kept at 115 +/- 5°C. After 5 hours of reaction, the first intermediate product was added. After the reaction continue d for another 5 h at 115 +/- 5°C, a second intermediate product was generated. A schematic diagram of the reaction process was as follows. $A_1$ was

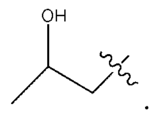

n2 was 25. m2 was 25. $R_3$ was $-CH_2CH_3$.

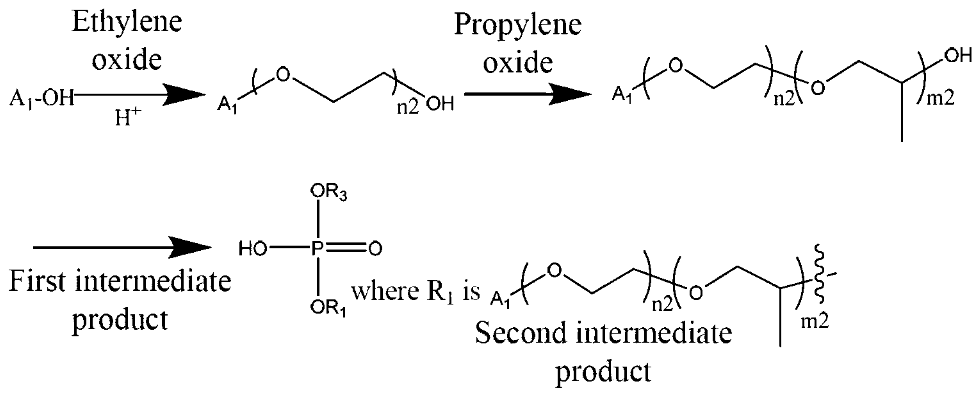


Preparation of polymer

The second intermediate product was subjected to an addition reaction with acrylamide at a room temperature for 12 h. Then, $HO(CH_2)_4Cl$ was added to take a substitution reaction at a room temperature under an alkaline condition for 6 h. Then the addition reaction and the substitution reaction above were cycled once to prepare a product of Formula X as

represented in the following figure having $R_6$ being - $(CH_2)_4$-, and n being 2. The weight-average molecular weight of the polymer was 3109.

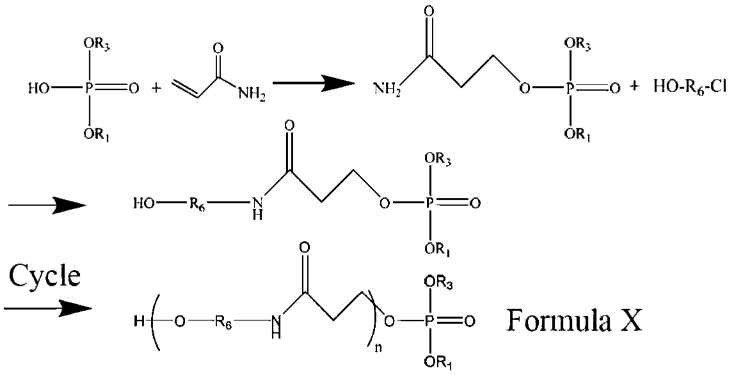


Formula X

(2) Preparation of positive electrode slurry

A positive electrode active material of carbon-coated lithium iron phosphate (LFP@C), a conductive agent of carbon black (SP), a binder of polyvinylidene fluoride (PVDF), and a dispersant (the above polymer) were added into N-methylpyrrolidone (NMP) according to a mass ratio of 96.5:2:1:0.5. The mass percentage of the dispersant was 0.5% of the dray material in a slurry. The weight-average molecular weight of the PVDF was 700,000. The molar ratio of $sp^2$ hybridized carbon atoms to $sp^3$ hybridized carbon atoms in a carbon coating layer of the lithium iron phosphate was 0.271.

(3) Preparation of positive electrode sheet

A positive electrode slurry was uniformly coated onto two surfaces of an aluminum foil positive electrode current collector, and was then dried to obtain a film layer. Next, a positive electrode sheet was obtained through cold pressing and cutting. The areal density of the positive electrode sheet was 450 mg/1,540.25 $mm^2$.

(4) Preparation of negative electrode sheet

A negative electrode active material of artificial graphite, a conductive agent of carbon black, a binder of styrene butadiene rubber (SBR), and a thickener of hydroxymethyl cellulose sodium (CMC) were added into a solvent of deionized water according to a weight ratio of 96:2:1: 1, and were uniformly mixed to prepare a negative electrode slurry. The negative electrode slurry was uniformly coated onto two surfaces of a copper foil of a negative electrode current collector in many times. A negative electrode sheet was then obtained through drying, cold pressing, and cutting.

(5) Separator

A polypropylene film was used as a separator.

(6) Preparation of electrolyte solution

In an argon gas atmosphere glove box ($H_2O$<0.1 ppm, $O_2$<0.1 ppm), organic solvents of ethylene carbonate (EC) and ethyl methyl carbonate (EMC) were uniformly mixed according to a volume ratio of 3/7. A lithium salt of $LiPF_6$ was dissolved into the organic solvents for preparation into a solution having a mass content of 12.5% to obtain an electrolyte solution.

(7) Preparation of secondary battery

The positive electrode sheet, the separator and the negative electrode sheet prepared in Embodiment 1 were stacked sequentially, with the separator being located between the positive electrode sheet and the negative electrode sheet to play the role of isolation. Then the stack was wound to a bare battery cell. After welding tabs to the bare battery cell, it was charged into an aluminum shell, and was baked at 80°C to remove water. Subsequently, the electrolyte solution was immediately injected, and sealing was performed to obtain an uncharged battery. The uncharged battery was then sequentially subjected to still standing, hot and cold pressing, chemical formation, shaping, capacity test, and the like to obtain a lithium-ion battery product of Embodiment 1.

Embodiment 2

A preparation method was similar to that in Embodiment 1, except that the type of the dispersant was changed, the first two steps of the dispersant synthesis process were the same as those in Embodiment 1, the nitrogen-containing monomer added in the third step was 3-amino-1-propylene, a structural formula of the dispersant was as follows, and $R_1$, $R_3$, $R_6$, and n were the same as those in Embodiment 1.

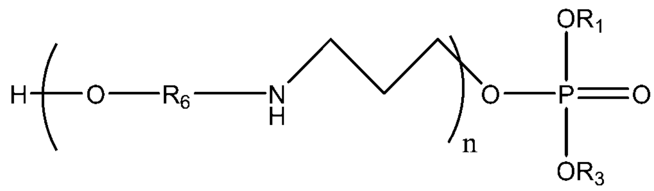

Embodiment 3

A preparation method was similar to that in Embodiment 1, except that the type of the dispersant was changed. The first two steps of the dispersant synthesis process were the same as those in Embodiment 1. A preparation process for the polymer in the third step was as follows:
Butadiene was added into the second intermediate product to react for 0.5 h at 100°C. Then, acrylamide was added for reaction at 110°C for 6 h in an alkaline environment to obtain the polymer. A schematic diagram of the reaction was as shown in the following figure. $R_1$ and $R_3$ were the same as those in Embodiment 1, s was 3, t was 3, and a structural unit derived from the butadiene and a structural unit derived from the acrylamide were randomly copolymerized.

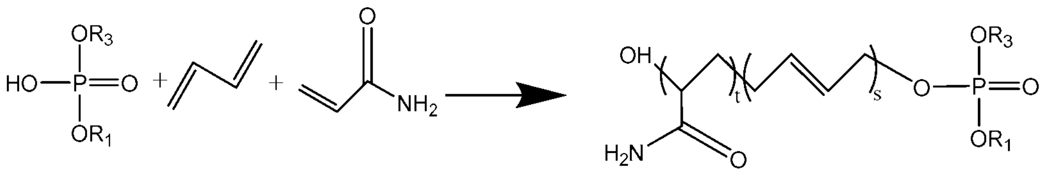

Embodiment 4

A preparation method was similar to that in Embodiment 1, except that the type of the dispersant was changed, the first two steps of the dispersant synthesis process were the same as those in Embodiment 1, and a preparation process for the polymer in the third step was as follows:
Butadiene was added into the second intermediate product to react at 100°C for 0.5 h. Then, 3-amino-1-propylene was added for reaction at 110°C for 6 h in an alkaline environment to obtain the polymer. A schematic diagram of the reaction was as shown in the following figure. $R_1$ and $R_3$ were the same as those in Embodiment 1, s was 3, t was 3, and a structural unit derived from the butadiene and a structural unit derived from the 3-amino-1-propylene were randomly copolymerized.

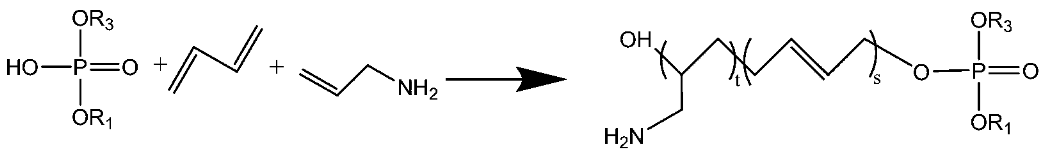

Embodiment 5

A preparation method was similar to that in Embodiment 1, except that the type of the dispersant was changed. The first two steps of the dispersant synthesis process were the same as those in Embodiment 1, and a preparation process for the polymer was as follows:
Butadiene was added into the second intermediate product to react at 100°C for 6.5 h to obtain the polymer. A schematic diagram of the reaction was as shown in the following figure. $R_1$ and $R_3$ were the same as those in Embodiment 1. s+t was 6.

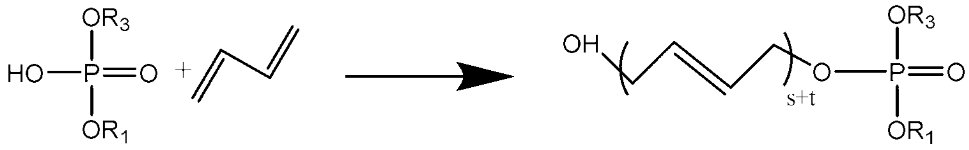

Embodiment 6

A preparation method was similar to that in Embodiment 1, except that the type of the dispersant was different. The preparation method for the dispersant included: the product of Embodiment 1 continuously reacted with 3-amino-1-propylene to prepare the polymer with the terminal group being an amino group with the structure shown as follows. $R_1$, $R_3$, $R_6$, and n were the same as those in Embodiment 1.

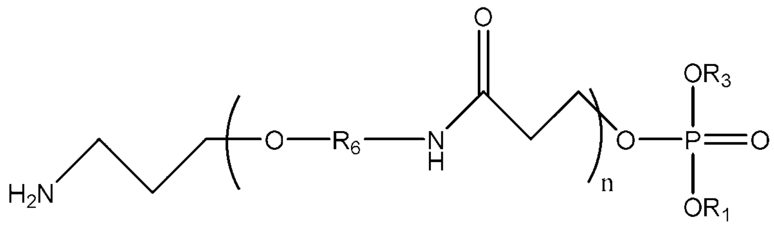

Embodiment 7

A preparation method was similar to that in Embodiment 1, except that the product of Embodiment 1 continuously reacted with acrylamide to prepare the polymer with the terminal group being an amide group, with the structure shown as follows. $R_1$, $R_3$, $R_6$, and n were the same as those in Embodiment 1.

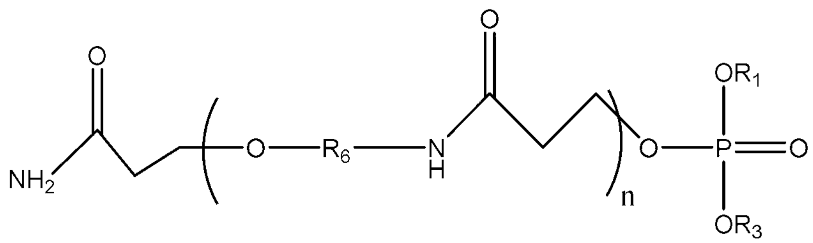

Preparation methods in Embodiments 8 to 15 were similar to that in Embodiment 7, except that in Embodiments 8 to 11, the weight-average molecular weight of the polymer was adjusted and controlled by adjusting the polymerization degree of the polyether segment, in Embodiments 12 to 15, the total mass of the positive electrode film layer was kept unchanged by adjusting the addition amount of the dispersant, with the change of the mass content of the dispersant, the mass percentage of the positive electrode active material was correspondingly adjusted, and the specific parameters were as shown in Table 1.

A preparation method in Embodiment 16 was similar to that in Embodiment 3. The unsaturated-bond-containing organic monomer added in the process of preparing the polymer in the preparation process of the dispersant was

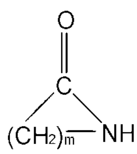,

m=4. A structural formula of the prepared dispersant was as follows:

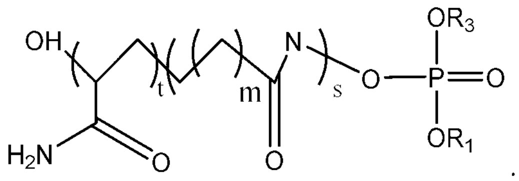

R1, R3, s, and t were the same as those in Embodiment 3.

Embodiment 17

A preparation method in Embodiment 17 was basically the same as that in Embodiment 7, except that the monomer added in the preparation process of R1 was ethylene oxide, so that the polyether segment was polyethylene oxide.

Embodiment 18

A preparation method in Embodiment 18 was basically the same as that in Embodiment 7, except that the anchoring group of the dispersant in Embodiment 7 was a phosphite group. A preparation method was basically the same as the preparation method for the dispersant in Embodiment 7, except that in the preparation process, $POCl_3$, $PCl_3$ was initially added. A structure of the dispersant was as shown by the following formula. $R_1$, $R_3$, $R_6$, and n were the same as those in Embodiment 1.

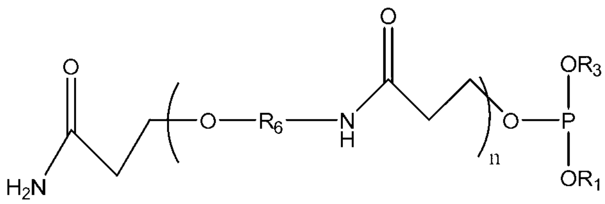

Embodiment 19

A preparation method in Embodiment 19 was basically the same as that in Embodiment 7, except that the $R_3$ group in Embodiment 19 was the same as the $R_1$ group, both being polyether segments. n2 was 12. m2 was 13.

A preparation process for the dispersant was basically the same as that in Embodiment 7, except that a preparation process for the second intermediate product was different, and was specifically as follows:

1,2-Propanediol (0.4% of the total mass of ethylene oxide, propylene oxide monomers, and $POCl_3$), and concentrated sulfuric acid (0.3% of the total mass) were weighed, and put into a reaction kettle. A lid of the reaction kettle was then closed. A fixing screw bolt was tightened with a wrench. The reaction kettle was subjected to vacuum evacuation. Replacement was performed for 3 times by high-purity nitrogen gas. Ethylene oxide and propylene oxide were sequentially added at a molar ratio of $n_2$:$m_2$ for a block polymerization reaction. In the reaction process, a pressure was kept at 0.3 +/- 0.05 MPa and the temperature was kept at 115 +/- 5°C. After 5 hours of reaction, $POCl_3$, dichloromethane (DCM) and sodium hydroxide were added. After the reaction continue d for another 5 h at 115 +/- 5°C in a nitrogen atmosphere, water was added to react at 50°C for 10 h to generate a product. A schematic diagram of the reaction process was shown as follows. $A_1$ was

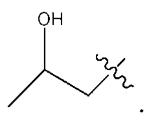

n2 was 12. m2 was 13.

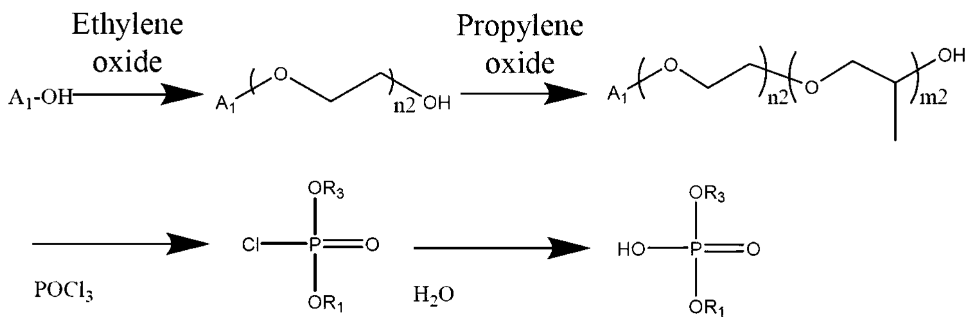


where $R_1$ and $R_3$ are

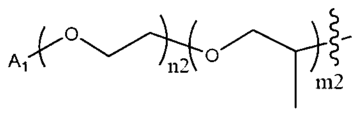

The product was continued to react by using a method the same as that in Embodiment 7 to bond the $R_2$ group to generate a phosphorus-containing polymer for use as a dispersant.

Embodiment 20

The preparation method in Embodiment 20 was basically the same as that in Embodiment 7, except that the weight-average molecular weight of the binder PVDF was 300,000. A ratio of the positive electrode active material of the carbon-coated lithium iron phosphate (LFP@C), to the conductive agent of carbon black (SP), to the binder of polyvinylidene fluoride (PVDF), to the dispersant was 96:2:1.5:0.5.

Embodiment 21

In Embodiment 21,

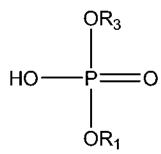

prepared in Embodiment 19 was directly used as the dispersant, without bonding the $R_2$ group.

Embodiment 22

A preparation method in Embodiment 22 was basically the same as that in Embodiment 19, except that phenol, instead of 1,2-propanediol, was initially added in the polyether segment synthesis process of the dispersant preparation, and a catalyst was potassium hydroxide. $A_1$ was

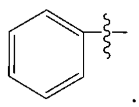

n2 was 12. m2 was 13. $R_6$ was $-(CH_2)_4-$. n was 2.

Specifically, the dispersant was:

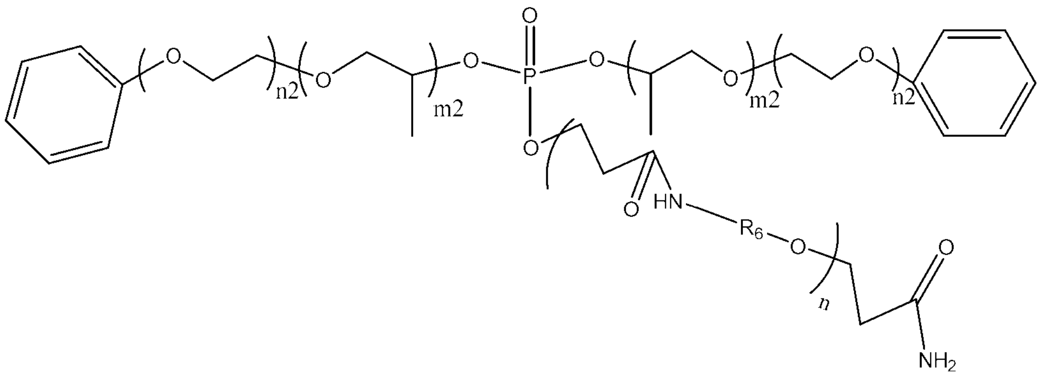

Embodiment 23

In Embodiment 23, the product prepared in the synthesis process of Embodiment 22 was directly used as the dispersant. The specific structural formula was as follows:

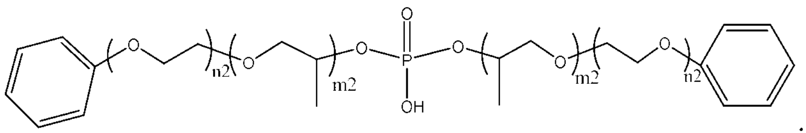

.

Embodiment 24

A preparation method in Embodiment 24 was basically the same as that in Embodiment 23, except that in the final step of the product preparation process, no water was added for hydrolysis, but phenol was added to react at 50°C for 10 h to generate the product which was directly used as the dispersant. The specific structural formula was

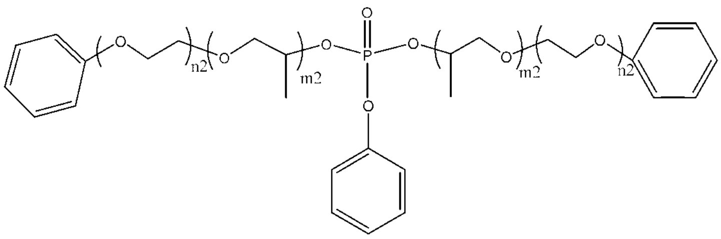

.

Embodiment 25

A preparation method in Embodiment 25 was basically the same as that in Embodiment 7, except that phenol, instead of 1,2-propanediol, was initially added in the polyether segment synthesis process. $A_1$ in the product was a phenyl group.

Embodiment 26

A preparation method in Embodiment 26 was basically the same as that in Embodiment 22, except that the positive active material was the carbon-coated lithium iron manganese phosphate. A preparation method was specifically as follows:

Step S1: 689.6 g of manganese carbonate, 455.27 g of ferrous carbonate, 4.65 g of cobaltous sulfate, and 4.87 g of vanadium dichloride were added and sufficiently mixed in a mixer for 6 h. Then, the obtained mixture was transferred into a reaction kettle, followed by addition of 5 L of deionized water and 1,260.6 g of oxalic acid dihydrate, was heated to 80°C, and was sufficiently stirred at a revolving speed of 500 rpm for 6 h to mix well, obtaining a Fe-Co-V co-doped manganese oxalate suspension. Then, the suspension was filtered, and dried at 120°C, and then, sand milled to obtain Fe-Co-V-S co-doped manganese oxalate particles with a particle size of 100 nm.

Step S2: 1,793.1 g of manganese oxalate prepared in Step S1, 368.3 g of lithium carbonate, 1,146.6 g of ammonium

dihydrogen phosphate, and 4.9 g of dilute sulphuric acid were added into 20 L of deionized water and uniformly stirred for a uniform mixed reaction at 80°C for 10 h, obtaining a slurry. The slurry was transferred into a spray drying device for spray drying granulation to obtain a powdery material. In a protective atmosphere (90% nitrogen gas and 10% hydrogen gas), the powdery material was sintered at 700°C in a roller kiln for 4 h to obtain a core $Li_{0.997}Mn_{0.60}Fe_{0.393}V_{0.004}C_{0.003}P_{0.997}S_{0.003}O_4$ of the positive electrode active material.

Step S3: PEG-3000 was used as the first carbon source. 58.2 g of PEG-1000 was dissolved into 500 g of deionized water. Then, stirring was performed for sufficient dissolution to obtain an aqueous solution. 1,571.9 g of the core material was added to the solution. The mixture was stirred and mixed for 6 h till uniform mixing. First sintering treatment was performed after spray draying. The temperature of the first sintering treatment was 600°C. The time of the first sintering treatment was 9 h. Thus, the first coated positive electrode active material was obtained after the first sintering treatment.

Step S4: glucose was used as the second carbon source. 37.3 g of glucose was dissolved into 500 g of deionized water. Then, stirring was performed for sufficient dissolution to obtain a glucose aqueous solution. 1,603.3 g of the first coated positive electrode active material obtained in Step S3 was added into the glucose solution. The mixture was stirred and mixed for 6 h till uniform mixing. Second sintering treatment was performed after spray draying. The temperature of the second sintering treatment was 750°C. The time of the second sintering treatment was 20 h. Thus, the positive electrode active material was obtained after the second sintering treatment.

Embodiments 27-28

Preparation methods in Embodiment 27 and Embodiment 28 were basically the same as that in Embodiment 26, except that the preparation method for the positive electrode active material was different. Specific different parameters were as follows:

in Embodiment 27, the first carbon source was PEG-10000, the first sintering temperature was 500°C, and the first sintering treatment time was 5 h; and the second carbon source was glucose, the second sintering temperature was 550°C, and the second sintering treatment time was 20 h.

In Embodiment 28, the first carbon source was PEG-2000, the first sintering temperature was 660°C, and the first sintering treatment time was 9 h; and the second carbon source was sucrose, the second sintering temperature was 750°C, and the second sintering treatment time was 6 h.

Comparative example

Comparative examples 1-2

A preparation method in Comparative example 1 was basically the same as that in Embodiment 1, except that no dispersant was added.

A preparation method in Comparative example 2 was basically the same as that in Embodiment 1, except that the added dispersant was:

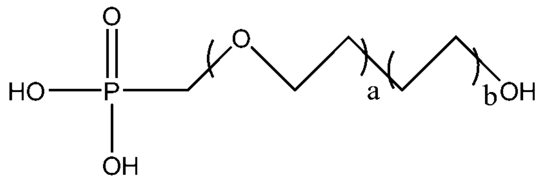

a was 3. b was 3.

Comparative example 3

A preparation method in Comparative example 3 was basically the same as that in Embodiment 26, except that the dispersant in Comparative example 3 was the same as that in Comparative example 2.

Comparative example 4

A preparation method in Comparative example 4 was basically the same as that in Embodiment 27, except that the dispersant in Comparative example 4 was the same as that in Comparative example 2.

Comparative example 5

A preparation method in Comparative example 5 was basically the same as that in Embodiment 28, except that the dispersant in Comparative example 5 was the same as that in Comparative example 2.

**II. Performance test**

1. Characterization of polymer

(1) Weight-average molecular weight

A Waters 2695 Isocratic HPLC type gel permeation chromatography instrument (differential refraction detector 2141) was used. A polystyrene solution sample with a mass percentage of 3.0% was used as a reference. A matched chromatographic column (oil-based: Styragel HT5 DMF7.8*300 mm+Styragel HT4) was selected. A 3.0% polymer solution was prepared from a purified N-methylpyrrolidone (NMP) solution. The prepared solution was subjected to sill standing for one day for later use. During the test, a syringe aspirated tetrahydrofuran for repeated flushing for many times. Then, 5 ml of a test solution was aspirated. Air in the syringe was expelled. A needle tip was wiped dry. Finally, the sample solution was slowly injected to a sample inlet. Data was acquired after the reading was stable.

2. Positive electrode active material

(1) Determination of hybridization form of carbon atoms in carbon coating layer:

Determination of hybridization form of carbon atoms in carbon coating layer: this test was performed through Raman spectroscopy. Peak deconvolution was performed on an energy spectrum of the Raman test to acquire $I_g/I_d$. $I_d$ was the peak intensity of carbon in a $sp^3$ form. $I_g$ was the peak intensity of carbon in a $sp^2$ form. Thus, the molar ratio of the carbons in the two forms was confirmed.

(2) Carbon coating layer thickness test

According to a carbon coating layer thickness test, a thin slice with a thickness about 100 nm was cut from the middle of a single particle of the prepared positive electrode active material through FIB. Then, the thin slice was subjected to TEM test to acquire an original TEM test image. The original image is saved in the format of (xx.dm3). The original image acquired through the TEM test was opened in a Digital Micrograph software. The carbon coating layer was recognized through lattice spacing and included angle information. The thickness of the carbon coating layer was measured. The thicknesses of three positions of the selected particle were measured and an average value was calculated.

3. Positive electrode slurry

(1) Maximum solid content of slurry

The maximum solid content of the positive electrode slurry refers to the maximum solid content of the slurry that simultaneously satisfies the conditions of as-delivered viscosity between 4,000-35,000 mPa·s and no gelation after 24-hour still standing. A slurry solid content test method was as follows: the slurry was weighed (recorded as $m_0$), and placed into a weight loss rate test instrument; a solvent was evaporated from the slurry till a weight loss rate was lower than 0.3%, and the remaining weight was recorded as $m_1$; and the solid content = $m_1/m_0$*100%.

(2) Filtering time

A 200-mesh filtering screen having an area of $30\times30$ $cm^2$ was taken and folded into a funnel shape. Two beakers were taken, with one being placed on the desktop, and the other being fully filled with 500 ml of the slurry. The slurry was poured into the filtering screen funnel. The filtering time of dripping 300 ml slurry was recorded.

4. Positive electrode sheet

(1) Electrode sheet brittleness test

A non-defective positive electrode sheet with a compaction density of 2.6 $g/cm^3$ was taken and longitudinally cut

into samples (≥ 4) in a length*width size of 25 cm*4 cm. The samples were pre-folded in a longitudinal direction (25 cm direction) at first. Then, a film was placed onto a test platform to be rolled and pressed once by a 2 kg cylindrical pressure roller. If there was light transmittance, the number of brittleness light transmittance was counted as 1. If there was no light transmittance, the reverse folding and rolling were repeated. Folding creases were observed against the light to check for light transmittance or fracture. The actual number of foldings was recorded. An average number was taken as a test result.

5. Secondary battery

(1) Maximum volume energy density

The maximum volume energy density refers to the battery volume energy density measured when a positive electrode sheet is at an extreme compaction density. The extreme compaction density is defined as a smaller value between the compaction densities corresponding to an elongation rate of 6‰ of the electrode sheet and the compaction density corresponding to a flexibility folding count of 2 times of the electrode sheet.

A method for measuring discharging energy of a battery cell was as follows:

The battery cell was subjected to still standing at 25°C for 2 h to ensure that the temperature of the battery cell was 25°C. The battery cell was charged at 0.33C to a charging cut-off voltage and at 25°C. Then, constant-voltage charging was continuously performed at the charging cut-off voltage until the current was 0.05C. Then, the charging was stopped (where C represents the rated capacity of the battery cell). After the battery cell was subjected to still standing at 25°C for 1 h, the battery cell was discharged at 0.33C to a discharging cut-off voltage at 25°C. The total discharging capacity C0 of the battery cell was recorded. The total discharging energy was E0.

A method for measuring the volume of the battery cell was as follows:

The length, width, and height of the battery cell were measured to calculate the volume value M0 of the battery cell.

A calculation formula of the energy density of the battery was as follows:

$$\text{Battery energy density} = \text{battery cell discharging energy E0/battery cell volume M0.}$$

(2) Cycling capacity retention rate at 40 cycles under 25°C

A voltage calibration method was as follows:

The battery cell was subjected to still standing at 25°C for 2 h to ensure that the temperature of the battery cell was 25°C. The battery cell was charged at 0.33C0 to 4.25 V at 25°C, was subjected to 4.25 V constant-voltage charging until the current was 0.05C0, and was then subjected to still standing for 1 h. The battery cell was discharged at 0.33C0 to 0.95C0 at 25°C. A voltage V1 at this moment was recorded. After still standing for 5 min, discharging was performed at 0.33C0 to 2.0 V at 25°C. After still standing for 5 min, the battery cell was charged at 0.33C0 to 0.97C0 at 25°C. A voltage V2 at this moment was recorded.

A cycling test flow process was as follows:

The battery cell was subjected to still standing at 25°C for 2 h to ensure that the temperature of the battery cell was 25°C. The battery cell was charged at 0.33C0 to the voltage V2 at 25°C, and was then subjected to still standing for 0.5 h. The battery cell was discharged at 0.33C0 to the voltage V1 at 25°C. A capacity Cn at this moment was recorded. After the still standing for 0.5 h, the above steps were repeated till the number n of cycles was 40 cls.

After repeating the above steps for 40 cls, Cn/C0 was recorded as the cycling capacity retention rate, and was used as an indicator of evaluating the battery cycling performance.

(3) Full battery cycle number test

In a 45°C constant-temperature environment, at 2.5 V to 4.3 V, the full battery was charged at 1 C to 4.3 V, and then, was subjected to constant-voltage charging at 4.3 V till the current was lower than or equal to 0.05 mA. Till standing was performed for 5 min. Then, discharging was performed at 1C to 2.5 V. A discharging capacity at this moment was recorded as $D_0$. The above charging and discharging cycles were repeated until the discharging capacity was reduced to 80% of $D_0$. The number of cycles suffered by the battery at this moment was recorded.

**III. Analysis of test results of embodiments and comparative examples**

Table 1

| Serial number | Positive electrode slurry | | | Positive electrode sheet |
|---|---|---|---|---|
| | Dispersant | Maximum solid content of slurry | Filtering time (s) | Number of bending times/times |
| | Addition amount | | | |
| Embodiment 1 | 0.5% | 63% | 66 | 3 |
| Embodiment 2 | 0.5% | 63% | 60 | 3 |
| Embodiment 3 | 0.5% | 63% | 51 | 3 |
| Embodiment 4 | 0.5% | 63% | 54 | 3 |
| Embodiment 5 | 0.5% | 61% | 60 | 3 |
| Embodiment 6 | 0.5% | 65% | 70 | 3 |
| Embodiment 7 | 0.5% | 65% | 60 | 3 |
| Embodiment 12 | 0.1% | 61% | 73 | 3 |
| Embodiment 13 | 2% | 70% | 27 | 4 |
| Embodiment 14 | 0.2% | 65% | 65 | 3 |
| Embodiment 15 | 1% | 69% | 32 | 4 |
| Embodiment 16 | 0.5% | 66% | 45 | 4 |
| Embodiment 17 | 0.5% | 61% | 80 | 2 |
| Embodiment 18 | 0.5% | 59% | 80 | 2 |
| Embodiment 19 | 0.5% | 64% | 50 | 4 |
| Embodiment 21 | 0.5% | 60% | 73 | 4 |
| Embodiment 22 | 0.5% | 68% | 55 | 5 |
| Embodiment 23 | 0.5% | 62% | 50 | 5 |
| Embodiment 24 | 0.5% | 64% | 70 | 5 |
| Embodiment 25 | 0.5% | 67% | 50 | 3 |
| Comparative example 1 | / | 52% | 90 | 1 |
| Comparative example 2 | 0.5% | 58% | 82 | 3 |

It can be seen from comparison among embodiments and comparative examples that all embodiments included the polymer dispersant as represented by Formula I. It can effectively improve the maximum solid content of the slurry, shorten the filtering time, improve the production efficiency and quality of the electrode sheet, and improve the flexibility of the electrode sheet at the same time.

It can be seen from comparison between Embodiments 1 to 4 and Embodiment 5 that the inclusion of at least one of the amide group and the amino group in the organic segment of $R_2$ can further improve the maximum solid content of the slurry.

It can be seen from comparison between Embodiments 6 to 7 and Embodiment 1 that compared with other terminal groups, the terminal group of $R_2$ including at least one of $-C(O)-NH_2$ and $-CH_2-NH_2$ can more effectively achieve the dispersion effect of the polymer, and improve the maximum solid content of the slurry.

It can be seen from comparison between Embodiment 7 and Embodiment 17 that compared with a condition of including the polyethylene oxide polyether segment, a condition of including a poly(ethylene oxide-propylene oxide) polyether segment in at least one of $R_1$ and $R_3$ has the advantages that the dispersion and flexibility improving effects can be more effectively achieved, and the maximum solid content of the slurry and the flexibility of the electrode sheet can be further improved.

It can be seen from comparison between Embodiment 19 and Embodiment 7 that compared with a condition that either R1 or R3 is the polyether segment, a condition that both R1 and R3 are polyether segments has the advantages that the slurry filtering time can be further shortened, and the flexibility of the electrode sheet can be improved.

It can be seen from comparison among Embodiments 7 to 11 that if the weight-average molecular weight of the

polymer is 2,000 to 5,000, the dispersion effect can be further achieved, the maximum solid content of the slurry can be improved, and the filtering time can be shortened.

Table 2

| Serial number | Positive electrode slurry | | | | Positive electrode sheet |
|---|---|---|---|---|---|
| | Dispersant | Dispersant | Maximum solid content of slurry | Filtering time (s) | Number of bending times/times |
| | Weight-average molecular weight | Addition amount | | | |
| Embodiment 7 | 3051 | 0.5% | 65% | 60 | 3 |
| Embodiment 8 | 1037 | 0.5% | 63% | 50 | 4 |
| Embodiment 9 | 2012 | 0.5% | 67% | 42 | 4 |
| Embodiment 10 | 5142 | 0.5% | 64% | 35 | 4 |
| Embodiment 11 | 9978 | 0.5% | 62% | 53 | 3 |

It can be seen from comparison between Embodiment 22 and Embodiment 19, comparison between Embodiment 25 and Embodiment 7, and comparison between Embodiment 23 and Embodiment 21 that if the terminal group of the polyether segment includes the phenyl group, the dispersibility of the slurry can be further improved.

Table 3

| Serial number | Positive electrode slurry | | | Positive electrode sheet | Battery performance |
|---|---|---|---|---|---|
| | Dispersant | Maximum solid content of slurry | Filtering time (s) | Number of bending times/times | Volume energy density |
| | Addition amount | | | | |
| Embodiment 12 | 0.1% | 61% | 73 | 3 | 430 wh/L |
| Embodiment 13 | 2% | 70% | 27 | 4 | 425 wh/L |
| Embodiment 14 | 0.2% | 65% | 65 | 3 | 450 wh/L |
| Embodiment 15 | 1% | 69% | 32 | 4 | 445 wh/L |

It can be seen from Embodiments 12 to 15 that based on the total mass of the dry material of the positive electrode slurry, if the mass content of the polymer is 0.1% to 2.0%, the slurry has high maximum solid content, short filtering time and high flexibility. Based on the total mass of the dry material of the positive electrode slurry, if the mass content of the polymer is 0.2% to 1.0%, both the processing performance of the electrode sheet and the energy density of the battery can be further considered.

Table 4

| Serial number | Positive electrode slurry | | | Positive electrode sheet |
|---|---|---|---|---|
| | Dispersant | Binder | | Number of bending times/times |
| | Addition amount | Weight-average molecular weight | Addition amount | |
| Embodiment 7 | 0.5% | 700,000 | 1% | 3 |
| Embodiment 20 | 0.5% | 300,000 | 1.5% | 2 |

It can be seen from comparison between Embodiment 7 and Embodiment 20 that if the positive electrode slurry includes the vinylidene fluoride polymer with a weight-average molecular weight not smaller than 700,000 as the binder, the consumption of the binder can be further reduced, and the flexibility of the electrode sheet can be improved.

Table 5

| Serial number | Positive electrode slurry | | | Positive electrode sheet | Battery performance |
|---|---|---|---|---|---|
| | Dispersant | Binder | | Number of bending times/times | Capacity retention rate after cycling for 40 times |
| | Addition amount | Weight-average molecular weight | Addition amount | | |
| Embodiment 7 | 0.5% | 700,000 | 1% | 3 | 99.9% |
| Embodiment 18 | 0.5% | 700,000 | 1% | 2 | 98% |

It can be seen from comparison between Embodiment 7 and Embodiment 18 that compared with the phosphite-based polymer, the phosphate-based polymer can more effectively improve the solid content of the slurry, shorten the filtering time, and improve the flexibility of the electrode sheet. Additionally, the phosphate-based polymer has better stability, and can effectively improve the cycling capacity retention rate of the battery on the basis of improving the dispersibility the slurry.

Table 6

| Serial number | Positive electrode active material | | | Positive electrode slurry | | | Positive electrode sheet | Battery performance |
|---|---|---|---|---|---|---|---|---|
| | Type | $sp^2$ **hybridize** d carbon to $sp^3$ hybridize d carbon | Thickness /nm | Additio n amount | Maximu m solid content of slurry | Filterin g time (s) | Number of bending times/times | Battery cycling performance (cls@80% SOH , 45°C) |
| Embodimen t 26 | Lithium iron man-ganese phos-phate@ C | 0.8 | 4 | 0.5% | 62% | 63 | 4 | 1499 |
| Embodimen t 27 | Lithium iron man-ganese phos-phate@ C | 0.3 | 15 | 0.5% | 64% | 60 | 4 | 478 |
| Embodimen t 28 | Lithium iron man-ganese phos-phate@ C | 0.5 | 7 | 0.5% | 62% | 55 | 4 | 1564 |
| Comparativ e example 3 | Lithium iron man-ganese phos-phate@ C | 0.8 | 4 | 0.5% | 52% | 72 | 3 | 1483 |
| Comparativ e example 4 | Lithium iron man-ganese phos-phate@ C | 0.3 | 15 | 0.5% | 56% | 89 | 3 | 469 |
| Comparativ e example 5 | Lithium iron man-ganese phos-phate@ C | 0.5 | 7 | 0.5% | 54% | 81 | 3 | 1545 |

It can be seen from comparison among Embodiments 26 to 28 and Comparison examples 3 to 5 that the polymer provided by embodiments of the present application can more effectively improve the dispersibility of the positive electrode active material having a high order degree of the carbon coating layer, and can synchronously improve the processing performance, the cycling stability, and the gravimetric capacity of the battery through the matching of the dispersant with the surface coating layer of the positive electrode active material.

It should be noted that the present application is not limited to the above implementations. The above implementations are merely exemplary, and implementations having substantially the same technical idea and the same effects within the scope of the technical solution of the present application are all included in the technical scope of the present application. In addition, other implementations constructed by applying various modifications conceivable to those skilled in the art to the implementations and combining some of the constituent elements of the implementations without departing from the scope of the essence of the present application are also included in the scope of the present application.

## Claims

1. A polymer, comprising a structure as represented by Formula I:

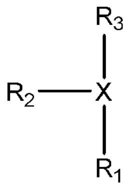 Formula I,

wherein X comprises a phosphate group or a phosphite group, $R_1$ and $R_3$ each independently comprise at least one of a polyether segment, a polyester segment, hydrogen and a hydrocarbon group, and at least one of $R_1$ and $R_3$ comprises a polyether segment or a polyester segment; and $R_2$ comprises an organic segment.

2. The polymer according to claim 1, wherein the organic segment of $R_2$ comprises at least one of an amide group, an amino group and an aryl group.

3. The polymer according to claim 1 or 2, wherein the organic segment of $R_2$ further comprises a $C_{2-12}$ hydrocarbon group.

4. The polymer according to any one of claims 1 to 3, wherein $R_2$ comprises a structure as represented by Formula II:

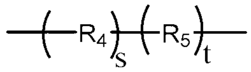 Formula II,

wherein $R_4$ and $R_5$ are randomly copolymerized, $R_4$ comprises at least one of a $C_{2-12}$ hydrocarbylene group, and a $C_{3-13}$ amide group, and $R_5$ comprises at least one of

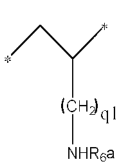, 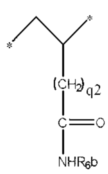, 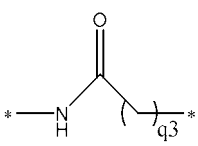, and 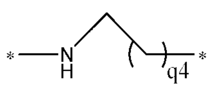; and

wherein q1, q2, q3, and q4 each independently comprise any integer between 0 and 4, and $R_6^a$ and $R_6^b$ comprise at least one of hydrogen and a $C_{1-4}$ alkyl group, $1 \le s \le 6$, and $1 \le t \le 10$.

5. The polymer according to any one of claims 1 to 4, wherein $R_2$ comprises a structure as represented by Formula III:

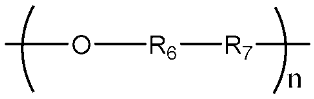
Formula III,

wherein $R_6$ comprises a $C_{2-12}$ hydrocarbylene group, and $R_7$ comprise at least one of

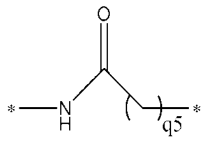 and 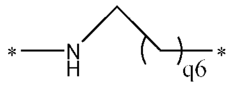 ;

and q5 and q6 each independently comprise any integer between 0 and 4, and $1 \leq n \leq 6$.

**6.** The polymer according to any one of claims 1 to 5, wherein a terminal group of $R_2$ comprises at least one of $-C(O)-NH_2$ and $-CH_2-NH_2$.

**7.** The polymer according to any one of claims 1 to 6, wherein at least one of $R_1$ and $R_3$ comprises a polyether segment, and optionally, each of $R_1$ and $R_3$ comprises a polyether segment.

**8.** The polymer according to any one of claims 1 to 7, wherein at least one of $R_1$ and $R_3$ comprises a polyether segment as represented by Formula IV:

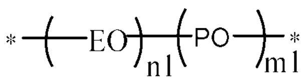
Formula IV,

wherein EO represents $-CH_2-CH_2-O-$, PO represents $-CH(CH_3)-CH_3-O-$, $4 \leq m1 \leq 50$, and $4 \leq n1 \leq 50$.

**9.** The polymer according to any one of claims 1 to 8, wherein a terminal group of the polyether segment comprises an aryl group.

**10.** The polymer according to any one of claims 1 to 9, wherein X comprises a phosphate group.

**11.** The polymer according to any one of claims 1 to 10, comprising at least one of the following polymers as represented by the following formulas:

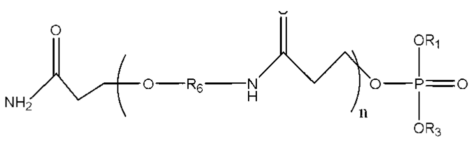 , 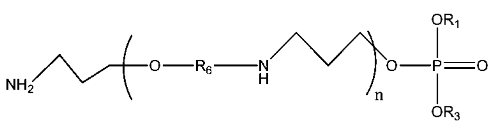 ,

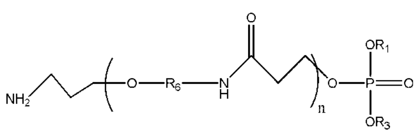 , 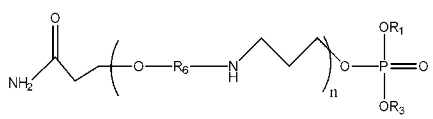 ,

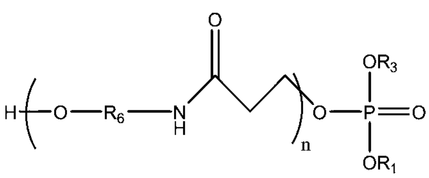 , 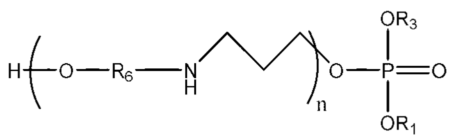 ,

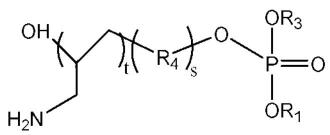,
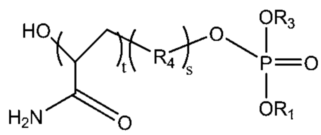,
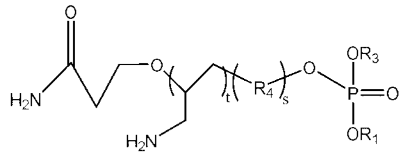,

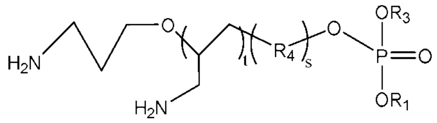,
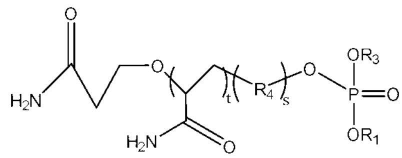,

and

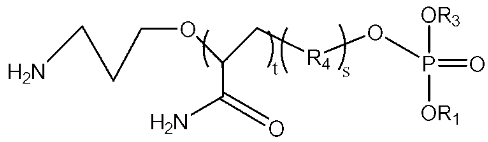,

wherein at least one of $R_1$ and $R_3$ comprises a block copolymer polyether segment as represented by Formula IV:

$$*-\left(EO\right)_{n1}\left(PO\right)_{m1}-* \quad \text{Formula IV,}$$

wherein EO represents $-CH_2-CH_2-O-$, PO represents $-CH(CH_3)-CH_2-O-$, $4 \leq m1 \leq 50$, $4 \leq n1 \leq 50$, and $R_6$ and $R_4$ each independently comprise at least one of a $C_{4-8}$ alkylene group and a $C_{4-8}$ alkenylene group.

**12.** The polymer according to claim 11, wherein a terminal group of the polyether segment comprises an aryl group.

**13.** The polymer according to any one of claims 1 to 10, wherein the polymer is as represented by the following formula:

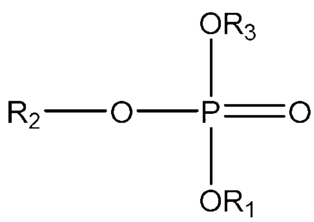,

wherein $R_2$ comprises at least one of hydrogen, an aryl group, a substituted or unsubstituted alkyl group, and an amino-group-containing or amide-group-containing organic segment,
at least one of $R_1$ and $R_3$ comprises a block copolymer polyether segment as represented by Formula IV:

$$*-\left(EO\right)_{n1}\left(PO\right)_{m1}-* \quad \text{Formula IV,}$$

wherein EO represents $-CH_2-CH_2-O-$, PO represents $-CH(CH_3)-CH_2-O-$, $4 \leq m1 \leq 50$, $4 \leq n1 \leq 50$, and a terminal group of the polyether segment comprises a phenyl group.

**14.** The polymer according to any one of claims 1 to 13, wherein a weight-average molecular weight of the polymer is 1,000 to 10,000, and optionally 2,000 to 5,000.

**15.** A preparation method for a polymer, comprising:

reacting a compound as represented by Formula VI with $R_3OH$, $R_1OH$, water, and an unsaturated-bond-containing polymerization monomer to prepare a polymer comprising a structure as represented by Formula I:

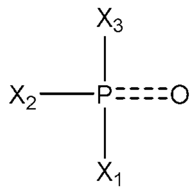
Formula VI

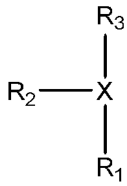
Formula I,

wherein X comprises a phosphate group or a phosphite group, and each of $X_1$, $X_2$ and $X_3$ comprises halogen; $R_1$ and $R_3$ each independently comprise at least one of a polyether segment, a polyester segment, hydrogen and a hydrocarbon group, and at least one of $R_1$ and $R_3$ comprises a polyether segment or a polyester segment; and $R_2$ comprises an organic segment.

**16.** The preparation method according to claim 15, comprising the following steps:

subjecting the compound as represented by Formula VI and $R_3OH$, $R_1OH$ and water to a first reaction to prepare an intermediate product as represented by Formula VII:

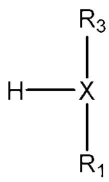
Formula VII;

and
subjecting the intermediate product and a polymerization monomer comprising at least one of unsaturated-bond-containing amide and unsaturated-bond-containing amine to a second reaction to prepare the polymer.

**17.** The preparation method according to claim 16, wherein the second reaction specifically comprises the following steps:

subjecting the intermediate product and at least one of the unsaturated-bond-containing amide and the unsaturated-bond-containing amine to an addition reaction, and then a substitution reaction with a halogen-substituted organic alcohol; and
sequentially cycling the addition reaction and the substitution reaction for many times, and then preparing the polymer, wherein
$R_2$ comprises a structure as represented by Formula III:

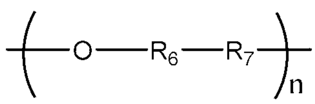
Formula III,

wherein $R_6$ comprises a $C_{2-12}$ hydrocarbon group, and $R_7$ comprises at least one of

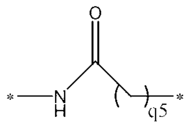

and

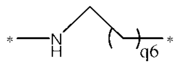 ;

wherein q5 and q6 each independently comprise any integer between 0 and 4, and 1≤n≤6.

**18.** The preparation method according to claim 16, further comprising the following steps:

subjecting the intermediate product and (i) at least one of unsaturated-bond-containing amide and unsaturated-bond-containing amine and (ii) at least one of an unsaturated-bond-containing hydrocarbon monomer and a cyclic amide monomer to a third reaction to prepare the polymer, wherein $R_2$ comprises a structure as represented by Formula II:

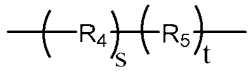 Formula II,

wherein $R_4$ and $R_5$ are randomly copolymerized, $R_4$ comprises at least one of a $C_{2-12}$ hydrocarbon group, and a $C_{3-13}$ amide group, and $R_5$ comprises at least one of

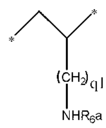 , 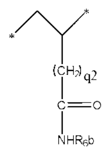 , 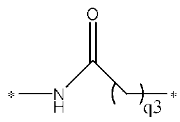 , and 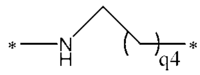 ;

and

wherein q1, q2, q3, and q4 each independently comprise any integer between 0 and 4, and $R_6^a$ and $R_6^b$ comprise at least one of hydrogen and a $C_{1-4}$ alkyl group, 1≤s≤6, and 1≤t≤10.

**19.** A preparation method for a polymer, comprising:

reacting a compound as represented by Formula VI with a raw material comprising $R_3OH$ and $R_1OH$ to prepare a polymer comprising a structure as represented by Formula I:

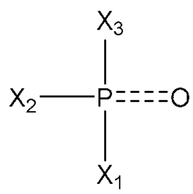 Formula VI

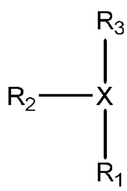 Formula I,

wherein X comprises a phosphate group or a phosphite group, and each of $X_1$, $X_2$ and $X_3$ comprises halogen; $R_1$ and $R_3$ each independently comprise at least one of a polyether segment, a polyester segment, hydrogen and a

hydrocarbon group, and at least one of $R_1$ and $R_3$ comprises a polyether segment, and a terminal group of at least one of the polyether segments comprises an aryl group; and $R_2$ comprises an organic segment.

**20.** Application of the polymer according to any one of claims 1 to 14 or the polymer prepared by the preparation method according to any one of claims 15 to 19 as a dispersant.

**21.** A positive electrode slurry, comprising a dispersant, wherein the dispersant comprises the polymer according to any one of claims 1 to 14 or the polymer prepared by the preparation method according to any one of claims 15 to 19.

**22.** The positive electrode slurry according to claim 21, comprising a positive electrode active material, wherein the positive electrode active material comprises at least one of lithium-containing phosphate and a carbon-modified material thereof; and optionally, the positive electrode active material comprises at least one of lithium iron phosphate and a doping material thereof, lithium iron manganese phosphate and a doping material thereof, a carbon-coated material of lithium iron phosphate and a doping material thereof, and a carbon-coated material of lithium iron manganese phosphate and a doping material thereof.

**23.** The positive electrode slurry according to claim 21 or 22, wherein the positive electrode active material comprises a core and a carbon coating layer, the carbon coating layer at least covers a part of surface of the core, the molar ratio of $sp^2$ hybridized carbon atoms to $sp^3$ hybridized carbon atoms in the carbon coating layer is not smaller than 0.2, optionally not smaller than 0.5, and optionally not smaller than 0.8.

**24.** The positive electrode slurry according to claim 23, wherein the thickness of the carbon coating layer is not greater than 15 nm; and optionally, the thickness of the carbon coating layer is not greater than 10 nm, and optionally, the thickness of the carbon coating layer is 4 nm to 8 nm.

**25.** The positive electrode slurry according to any one of claims 21 to 24, wherein based on the total mass of the dry material of the positive electrode slurry, the mass content of the polymer is 0.1% to 2.0%, and optionally 0.2% to 1.0%.

**26.** The positive electrode slurry according to any one of claims 21 to 25, comprising a binder, wherein the binder comprises a vinylidene fluoride polymer with a weight-average molecular weight not smaller than 300,000, and optionally, the weight-average molecular weight of the binder is 700,000 to 9,000,000.

**27.** The positive electrode slurry according to any one of claims 21 to 26, wherein a maximum solid content of the positive electrode slurry is not lower than 60%, and optionally 60% to 80%.

**28.** A positive electrode sheet, comprising a positive electrode film layer, wherein the positive electrode film layer is prepared from the positive electrode slurry according to any one of claims 21 to 27, or the positive electrode film layer comprises a dispersant, and the dispersant comprises the polymer according to any one of claims 1 to 14 or the polymer prepared by the preparation method according to any one of claims 15 to 19.

**29.** The positive electrode sheet according to claim 28, wherein the number of foldings of the positive electrode sheet at a compaction density of 2.6 $g/cm^3$ is not smaller than 2, and optionally 3 to 6.

**30.** The positive electrode sheet according to claim 28 or 29, wherein an areal density of the positive electrode sheet is not lower than 300 mg/1,540.25 $cm^2$, and optionally 300 mg/1,540.25 $cm^2$ to 600 mg/1,540.25 $cm^2$.

**31.** The positive electrode sheet according to any one of claims 28 to 30, wherein the positive electrode film layer comprises a dispersant, and the dispersant comprises a structure as represented by Formula I:

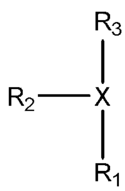

Formula I,

wherein

X comprises a phosphate group or a phosphite group, $R_1$ and $R_3$ each independently comprise at least one of a polyether segment, a polyester segment, hydrogen and a hydrocarbon group, and at least one of $R_1$ and $R_3$ comprises a polyether segment or a polyester segment; and $R_2$ comprises an organic segment; optionally, the organic segment of $R_2$ comprises at least one of an amide group and an amino group, and optionally, a terminal group of the polyether segment comprises an aryl group;
the positive electrode active material comprises at least one of lithium iron phosphate and a doping material thereof, lithium iron manganese phosphate and a doping material thereof, a carbon-coated material of lithium iron phosphate and a doping material thereof, and a carbon-coated material of lithium iron manganese phosphate and a doping material thereof; optionally, the positive electrode active material comprises at least one of lithium iron manganese phosphate and a doping material thereof, and a carbon-coated material of lithium iron manganese phosphate and a doping material thereof; and
based on the total mass of the positive electrode film layer, the mass content of the dispersant is 0.1% to 2.0%, and optionally 0.2% to 1.0%.

**32.** A secondary battery, comprising the positive electrode sheet according to any one of claims 28 to 31.

**33.** An electrical device, comprising the secondary battery according to claim 32.

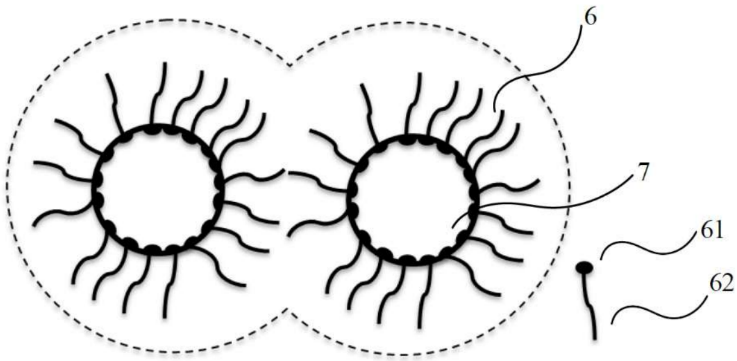


FIG. 1

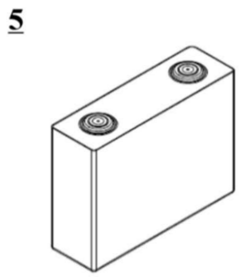


FIG. 2

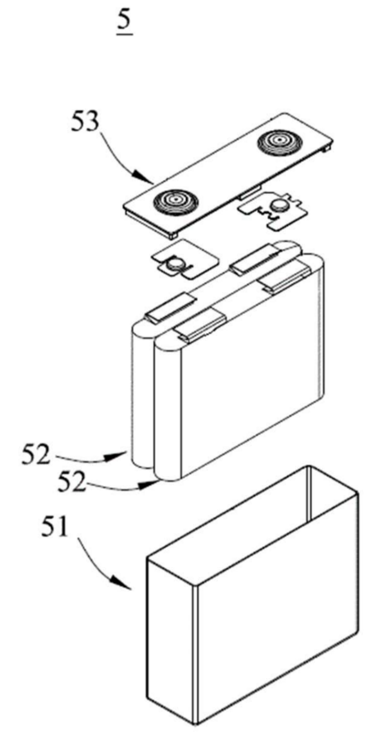


FIG. 3

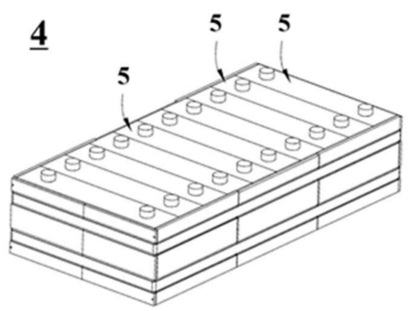


FIG. 4

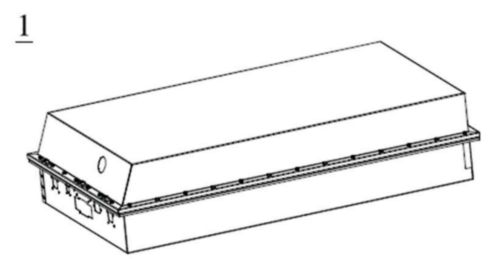


FIG. 5

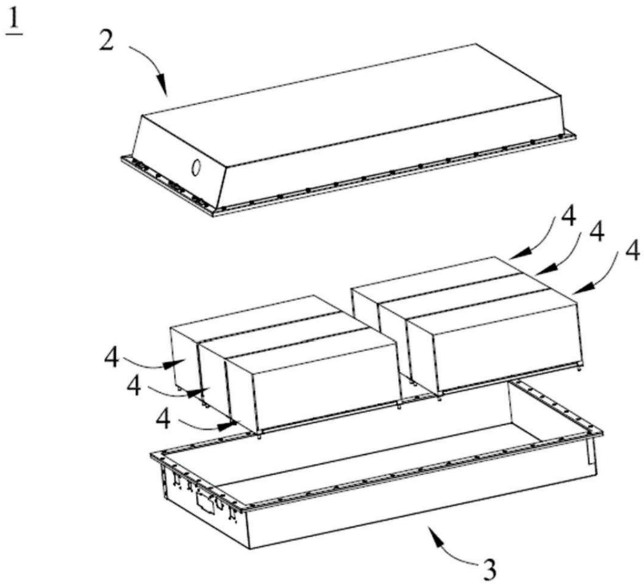


FIG. 6

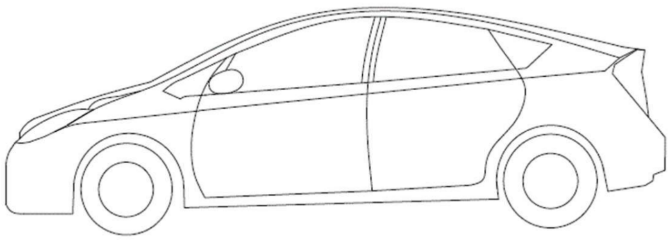

FIG. 7

**INTERNATIONAL SEARCH REPORT**

International application No.
**PCT/CN2024/095211**

**A. CLASSIFICATION OF SUBJECT MATTER**

C08G 65/335(2006.01)i； C08G 65/333(2006.01)i； C08G 65/329(2006.01)i； H01M 4/62(2006.01)i； H01M 4/136(2010.01)i； H01M 10/052(2010.01)i

According to International Patent Classification (IPC) or to both national classification and IPC

**B. FIELDS SEARCHED**

Minimum documentation searched (classification system followed by classification symbols)

IPC:C08G 65/-; H01M 4/-; H01M 10/-

Documentation searched other than minimum documentation to the extent that such documents are included in the fields searched

Electronic data base consulted during the international search (name of data base and, where practicable, search terms used)

CNKI, CNABS; CNTXT; EPODOC; WPI; ISI Web of Science; STN: 宁德时代, 电池, 正极, 浆料, 分散剂, 表面活性剂, 磷酸酯, 亚磷酸酯, 聚醚, 聚乙二醇, 聚丙二醇, 聚酯, 酰胺, 氨基, CONTEMPORARY AMPEREX, battery, positive electrode, slurry, polyether, polyethylene glycol, polypropylene glycol, polyesters, amides, amino

**C. DOCUMENTS CONSIDERED TO BE RELEVANT**

| Category* | Citation of document, with indication, where appropriate, of the relevant passages | Relevant to claim No. |
|---|---|---|
| X | US 2005227877 A1 (WO SHIMING; BAKER JOHN M.;) 13 October 2005 (2005-10-13) claims 1-12 | 1-3, 7-10, 13-15, 19, 20 |
| X | CN 110402516 A (LG CHEMICAL LTD.; POSTECH ACADEMY-INDUSTRY FOUNDATION) 01 November 2019 (2019-11-01) claims 1-15 | 1, 3, 10 |
| X | CN 111819725 A (LG CHEMICAL LTD.; POSTECH ACADEMY-INDUSTRY FOUNDATION) 23 October 2020 (2020-10-23) claims 1-13 | 1, 3, 10 |
| X | CN 113372550 A (JIANGNAN UNIVERSITY) 10 September 2021 (2021-09-10) description, embodiment 1 | 1, 3, 10 |
| X | US 6500917 B1 (AMERSHAM HEALTH A/S) 31 December 2002 (2002-12-31) description, embodiment 1 | 1, 3, 10 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **07 August 2024** | **27 August 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**

International application No.
**PCT/CN2024/095211**

**C. DOCUMENTS CONSIDERED TO BE RELEVANT**

| Category* | Citation of document, with indication, where appropriate, of the relevant passages | Relevant to claim No. |
|---|---|---|
| A | US 2023231137 A1 (CONTEMPORARY AMPEREX TECHNOLOGY CO., LTD.) 20 July 2023 (2023-07-20) entire document | 1-33 |

Form PCT/ISA/210 (second sheet) (July 2022)

**INTERNATIONAL SEARCH REPORT**
**Information on patent family members**

International application No.
**PCT/CN2024/095211**

| Patent document cited in search report | | | Publication date (day/month/year) | Patent family member(s) | | | Publication date (day/month/year) |
|---|---|---|---|---|---|---|---|
| US | 2005227877 | A1 | 13 October 2005 | US | 7208554 | B2 | 24 April 2007 |
| | | | | EP | 1742989 | A2 | 17 January 2007 |
| | | | | EP | 1742989 | A4 | 13 May 2009 |
| | | | | EP | 1742989 | B1 | 28 December 2011 |
| | | | | BRPI | 0509760 | A | 16 October 2007 |
| | | | | BRPI | 0509760 | B1 | 10 November 2015 |
| | | | | NO | 20065105 | L | 29 December 2006 |
| | | | | NO | 339150 | B1 | 14 November 2016 |
| | | | | WO | 2005100515 | A2 | 27 October 2005 |
| | | | | WO | 2005100515 | A3 | 09 November 2006 |
| | | | | CA | 2562269 | A1 | 27 October 2005 |
| | | | | CA | 2562269 | C | 25 November 2014 |
| | | | | ATE | 539101 | T1 | 15 January 2012 |
| CN | 110402516 | A | 01 November 2019 | ES | 2965482 | T3 | 15 April 2024 |
| | | | | HUE | 065086 | T2 | 28 April 2024 |
| | | | | JP | 2020510983 | A | 09 April 2020 |
| | | | | JP | 7101707 | B2 | 15 July 2022 |
| | | | | KR | 20190033422 | A | 29 March 2019 |
| | | | | KR | 102229457 | B1 | 18 March 2021 |
| | | | | EP | 3595070 | A2 | 15 January 2020 |
| | | | | EP | 3595070 | A4 | 26 February 2020 |
| | | | | EP | 3595070 | B1 | 01 November 2023 |
| | | | | US | 2019386340 | A1 | 19 December 2019 |
| | | | | US | 11387489 | B2 | 12 July 2022 |
| | | | | PL | 3595070 | T3 | 04 March 2024 |
| | | | | CN | 110402516 | B | 21 June 2022 |
| CN | 111819725 | A | 23 October 2020 | US | 2021091410 | A1 | 25 March 2021 |
| | | | | US | 11881554 | B2 | 23 January 2024 |
| | | | | KR | 20200011633 | A | 04 February 2020 |
| | | | | KR | 102346844 | B1 | 03 January 2022 |
| | | | | WO | 2020022777 | A1 | 30 January 2020 |
| | | | | EP | 3709425 | A1 | 16 September 2020 |
| | | | | EP | 3709425 | A4 | 31 March 2021 |
| | | | | JP | 2021508159 | A | 25 February 2021 |
| | | | | JP | 6976444 | B2 | 08 December 2021 |
| | | | | CN | 111819725 | B | 26 January 2024 |
| CN | 113372550 | A | 10 September 2021 | CN | 113372550 | B | 22 November 2022 |
| US | 6500917 | B1 | 31 December 2002 | ATE | 256159 | T1 | 15 December 2003 |
| | | | | JP | 2001510853 | A | 07 August 2001 |
| | | | | WO | 9905200 | A1 | 04 February 1999 |
| | | | | NO | 20000276 | D0 | 20 January 2000 |
| | | | | DE | 69820451 | D1 | 22 January 2004 |
| | | | | AU | 8548398 | A | 16 February 1999 |
| | | | | EP | 0998518 | A1 | 10 May 2000 |
| | | | | EP | 0998518 | B1 | 10 December 2003 |
| | | | | GB | 9715770 | D0 | 01 October 1997 |
| US | 2023231137 | A1 | 20 July 2023 | JP | 2024500202 | A | 05 January 2024 |
| | | | | EP | 4213234 | A1 | 19 July 2023 |
| | | | | KR | 20230079042 | A | 05 June 2023 |

Form PCT/ISA/210 (patent family annex) (July 2022)

**INTERNATIONAL SEARCH REPORT**
**Information on patent family members**

International application No.
**PCT/CN2024/095211**

| Patent document cited in search report | Publication date (day/month/year) | Patent family member(s) | Publication date (day/month/year) |
|---|---|---|---|
| | | WO 2023092389 A1 | 01 June 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202310961340X
- CN 202311098921